# EUROPEAN PATENT APPLICATION

(11) **EP 3 536 869 A1**
(43) Date of publication of application: **11.09.2019**
(21) Application number: 17867827.2
(22) Date of filing: 07.11.2017
(51) Int. Cl.: E04B 2/74, A47B 17/00, A47B 96/20

(54) **PANEL BODY, SPACE PARTITION DEVICE, FURNITURE WITH TOP BOARD, AND MANUFACTURING METHOD FOR PANEL BODY**

(30) Priority: 07.11.2016 JP 2016217664; 02.02.2017 JP 2017017854; 02.02.2017 JP 2017017855
(71) Applicant: Okamura Corporation, Kanagawa 220-0004 (JP); Tsubakimoto Kogyo Co., Ltd., Osaka-shi, Osaka 530-0001 (JP); Parker Corporation, Tokyo 103-8588 (JP)
(72) Inventor: YAMAMOTO Takayuki, Yokohama-shi Kanagawa 220-0004 (JP); BABA Nobuhiko, Tokyo 103-8588 (JP); OKAMURA Hideharu, Osaka-shi Osaka 530-0001 (JP); TSUKAMOTO Takahiro, Osaka-shi Osaka 530-0001 (JP); SAKIMOTO Takayuki, Higashiosaka-shi Osaka 577-0002 (JP)
(74) Representative: Cabinet Laurent & Charras
(86) International application number: PCT/JP2017/040137
(87) International publication number: WO 2018/084315

(57) **Abstract**

A panel body (1) according to the present invention includes a cushioning layer (51) that contains a fibrous base material (2A) and a cushioning layer (52) that contains a fibrous base material (2B). The first cushioning layer (51) and the second cushioning layer (52) respectively include heat-joining layers (10 and 12) which contain base materials (2A and 2B) and joining materials having lower melting points than the base materials (2A and 2B), and surface layers (20 and 22) which are bonded to surfaces of the heat-joining layers (10 and 12) and are formed of the base materials (2A and 2B).

## Description

### Technical Field

The present invention relates to a panel body, a partition device, a piece of furniture with a top board, and a method for manufacturing a panel body.

Priority is claimed on Japanese Patent Application No. 2016-217664, filed November 7, 2016, Japanese Patent Application No. 2017-017854, filed February 2, 2017, and Japanese Patent Application No. 2017-017855, filed February 2, 2017, the contents of which are incorporated herein by reference.

### Background

Generally, in a working space such as an office or a public facility, pieces of furniture with a top board are installed to provide workers with a space for working. In such a working space, in order to provide an environment in which a work space on the top board and an external space are defined, a view of a worker is blocked, allowing the worker to concentrate, and there are cases in which a panel body or a partition device including a panel body is disposed near a peripheral edge portion of a piece of furniture with a top board (for example, refer to Patent Document 1 and Patent Document 2).

Regarding panel bodies to be disposed near a peripheral edge portion of a piece of furniture with a top board as described above, for example, panel bodies which are decently finished by covering an outer peripheral surface of a flat plate-shaped base material having rigidity with a surface material such as cloth have been widely used. However, since the base material is formed of a material having rigidity, there is a problem of giving a worker an inorganic impression in a visual and tactile manner.

In consideration of the problem described above, in order to constitute a panel body having an organic and warm impression, for example, a method of constituting a panel body by providing a frame body in a peripheral edge portion of a base material and laying a surface material such as cloth in this frame body is proposed (for example, refer to Patent Document 3 to Patent Document 5).

### Document of Related Art

### Patent Document

[Patent Document 1] Japanese Patent Granted Publication No. 4060976
[Patent Document 2] Japanese Patent Granted Publication No. 4216389
[Patent Document 3] Japanese Patent Granted Publication No. 4133368
[Patent Document 4] Japanese Patent Granted Publication No. 4077327
[Patent Document 5] Japanese Patent Granted Publication No. 4167141

### Summary

### Technical Problem

For example, in panel bodies used for defining a space such as a working space, including the panel bodies disclosed in Patent Document 1 to Patent Document 5 described above, there has been demand for an additional function such as sound insulation or waterproofing (which will hereinafter be referred to as a predetermined function) between defined spaces.

However, when a surface material such as cloth is used as described above, there is a problem that it is difficult to make a panel body exhibit the predetermined function while retaining the organic and warm impression.

The present invention has been made in consideration of the circumstances described above, and an object thereof is to provide a panel body which exhibits a predetermined function while giving a worker an organic and warm impression, a partition device using a panel body, a piece of furniture with a top board, and a method for manufacturing a panel body.

In addition, in the panel bodies disclosed in Patent Document 3 to Patent Document 5 described above, it is difficult to ensure sufficient strength of a surface material itself, and there is a need to constitute a frame body or the like in order to reinforce the surface material, resulting in a problem of an increase in manufacturing man-hours and manufacturing cost. Moreover, since a frame body is used in the above panel bodies, there is a possibility that the organic and warm impression may be weakened and the design may deteriorate.

The present invention has been made in consideration of the circumstances described above, and another object thereof is to provide a panel body which gives a worker an organic and warm impression, has sufficient strength, and can be constituted inexpensively and simply, a partition device using a panel body, a piece of furniture with a top board, and a method for manufacturing a panel body.

In addition, in the technologies disclosed in Patent Document 1 to Patent Document 5, there is a need to use a hard member such as a base material or a frame body for obtaining strength of a partitioning panel body in parallel with a surface material for obtaining a soft texture.

The present invention has been made in consideration of the circumstances described above, and another object thereof is to provide a partitioning panel body, a partition device, and a piece of furniture with a top board which have a soft texture and can obtain strength required to maintain a shape without using a hard base material, a frame body, or the like.

### Solution to Problem

According to the present invention, a panel body, used for defining a space, includes a first cushioning layer and a second cushioning layer that contain a fibrous base material.

In the panel body described above, each of the first cushioning layer and the second cushioning layer includes a heat-joining layer which contains a base material and a joining material having a lower melting point than the base material, and a surface layer which is bonded to one surface of the heat-joining layer and is formed of a base material.

Here, any joining material can be included as long as the joining material is a material which is softened and can move into gaps between fibers in the fibrous base material when the material is heated to a temperature equal to or higher than the melting point, and which is hardened when the material is cooled to a temperature lower than the melting point. The joining material will be described below in detail.

In the panel body having such a configuration, when the heat-joining layer is heated to a temperature (which will hereinafter be referred to as "a predetermined heating temperature") which is the melting point of the joining material or higher and is lower than a melting point of the base material, heat from the heat-joining layer is transferred to an adjacent surface layer, so that the joining material contained in the heat-joining layer melts and moves into gaps between fibers of the base material of the surface layer. Therefore, a bonding surface between the surface layer and the heat-joining layer is impregnated with the joining material, and the joining material is thermally fused with the base material. In addition, the joining material is solidified when it is cooled to a temperature lower than the predetermined heating temperature. Therefore, the bonding strength between the surface layer and the heat-joining layer, and the strength of the panel body in its entirety are enhanced. Accordingly, the surface layer and the heat-joining layer are favorably bonded to each other while retaining the impression of the surface layer being organic and warm.

In the panel body having such a configuration, when a first heat-joining layer is heated to a temperature (which will hereinafter be referred to as "a predetermined heating temperature") which is the melting point of the joining material or higher and is lower than a melting point of the base material, the joining material melts, so that gaps between fibers of the base material in the surface layer are impregnated with the joining material and the joining material is thermally fused with the base material. The joining material is solidified when it is cooled to a temperature lower than the predetermined heating temperature. Accordingly, the surface layer is favorably bonded to one surface and the other surface of the first heat-joining layer by the joining material. Since the base materials forming the surface layers respectively exposed to the front and the rear of the panel body do not melt or deteriorate at the predetermined heating temperature, the organic and warm impression of the fibrous base material in the panel body is retained. Moreover, the panel body is strengthened due to the solidified first heat-joining fibers which have been cooled as described above. Moreover, since a fibrous material is mainly used as a raw material for the panel body, the panel body is constituted inexpensively and simply.

Moreover, the panel body according to the present invention may further include a functional sheet that is disposed between the first cushioning layer and the second cushioning layer and has a predetermined function.

In the panel body having such a configuration, the first cushioning layer and the second cushioning layer are respectively provided on a front surface and a rear surface of the functional sheet, so that the cushioning layers are disposed on the outermost sides of the panel body. Therefore, the organic and warm impression due to the base material is retained.

In addition, the panel body having the configuration described above includes the functional sheet, such that the predetermined function is exhibited.

In the panel body according to the present invention, the functional sheet may have a sound insulation function.

In the panel body having such a configuration, the panel body in its entirety exhibits the sound insulation function through the functional sheet.

In the panel body described above, the functional sheet may include a functional layer which has the predetermined function, a first bonding layer which is disposed between the functional layer and the first cushioning layer and bonds the functional layer and the first cushioning layer to each other, and a second bonding layer which is disposed between the functional layer and the second cushioning layer and bonds the functional layer and the second cushioning layer to each other.

In the panel body having such a configuration, the first cushioning layer and the second cushioning layer are favorably bonded to the functional layer by the first and second bonding layers, respectively.

In the panel body described above, the functional sheet may include a first function-enhancing layer which is disposed between the functional layer and the first bonding layer and enhances the predetermined function of the functional layer, and a second function-enhancing layer which is disposed between the functional layer and the second bonding layer and enhances the predetermined function of the functional layer.

In the panel body having such a configuration, the predetermined function exhibited by the functional layer is enhanced and the predetermined function of the functional sheet in its entirety is improved due to the first and second function-enhancing layers.

In the panel body described above, the first bonding layer and the second bonding layer may be formed of a material having a lower melting point than the base material.

In the panel body described above, the base material may be formed of polyester-based fiber. The functional layer may be formed of polyamide. The first bonding layer and the second bonding layer may be formed of polyethylene.

In the panel body having such a configuration, the first cushioning layer, the functional layer, and the second cushioning layer are favorably bonded to each other by the first and second bonding layers which can melt when the functional sheet is heated to the predetermined heating temperature.

In addition, the first and second cushioning layers and the functional sheet having a sound insulation function can be easily realized and cost reduction in the panel body can be achieved by using polyester-based fiber, polyamide, and low melting-point polyethylene having a lower melting point than polyester-based fiber which are easily worked and relatively inexpensive.

According to the present invention, a partition device and a piece of furniture with a top board include the panel body described above.

The partition device and the piece of furniture with a top board described above include the panel body having an organic and warm impression due to the base material and sufficient strength due to the hardened joining material as described above. Therefore, in a working space, a work space on the top board and an external space are defined and a view of a worker can be blocked without overwhelming or annoying the worker.

According to the present invention, a method for manufacturing a panel body includes a first laminating step of laminating a first surface layer formed of a fibrous base material on one surface of a first heat-joining layer which contains the base material and a joining material having a lower melting point than the base material, a first heating step of heating the first heat-joining layer from the other surface of the first heat-joining layer to a temperature which is the melting point of the joining material or higher and is lower than a melting point of the base material after the first laminating step, a second laminating step of laminating a second surface layer formed of the base material on one surface of a second heat-joining layer which contains the base material and the joining material, a second heating step of heating the second heat-joining layer from the other surface of the second heat-joining layer to the above temperature after the second laminating step, and a bonding step of bonding the first heat-joining layer and the second heat-joining layer by disposing the first heat-joining layer and the second heat-joining layer such that the other surface of the first heat-joining layer and the other surface of the second heat-joining layer face each other and pressing the first heat-joining layer and the second heat-joining layer in a direction from one surface toward the other surface of each of the first heat-joining layer and the second heat-joining layer after the first heating step and the second heating step.

In the method for manufacturing a panel body according to the present invention, the first heat-joining layer and the second heat-joining layer may be further disposed with a functional sheet having a predetermined function interposed therebetween such that the other surface of the first heat-joining layer and the other surface of the second heat-joining layer face each other.

In the method for manufacturing a panel body described above, in the first heating step and the second heating step, the first and second heat-joining layers are heated from the other surface at the predetermined heating temperature, so that the joining materials of the first and second heat-joining layers melt, gaps between fibers of the base materials in the first and second surface layers are impregnated with the joining materials, and the joining materials are thermally fused with the base materials. In addition, in the bonding step, the joining material cooled to a temperature lower than the predetermined heating temperature is solidified, and the first and second heat-joining layers are pressed in a direction from one surface toward the other surface of each of the heat-joining layers. Consequently, the first surface layer, the first heat-joining layer, the second heat-joining layer, and the second surface layer are favorably bonded to layers adjacent thereto by the joining material. Moreover, the first and second heat-joining layers are pressed in a direction from one surface toward the other surface of each of the heat-joining layers with the functional sheet interposed therebetween. Accordingly, it is possible to give the panel body an organic and warm impression due to the fibrous base material, to strengthen the panel body, and to constitute the panel body inexpensively and simply. In addition, accordingly, it is possible to give the panel body an organic and warm impression due to the fibrous base material and to make the functional sheet exhibit the predetermined function.

In the panel body described above, the heat-joining layer may include a first heat-joining layer which contains a fibrous base material and a joining material having a lower melting point than the base material, and a second heat-joining layer which contains a fibrous base material and a joining material having a lower melting point than the base material. A surface layer formed of the base material may be bonded to one surface of the first heat-joining layer and one surface of the second heat-joining layer. The other surface of the first heat-joining layer and the other surface of the second heat-joining layer may be bonded to each other.

In the panel body having such a configuration, when at least one of the first heat-joining layer and the second heat-joining layer is heated to the predetermined heating temperature, the joining material of each of the heat-joining layers melts, so that gaps between fibers of the base material in the other heat-joining layer are impregnated with the joining material and the joining material is thermally fused with the base material. The joining material is solidified when it is cooled to a temperature lower than the predetermined heating temperature. Accordingly, the second heat-joining layer is favorably bonded to one surface of the first heat-joining layer by the joining material. In addition, similar to the panel body described above, the surface layer is favorably bonded to the other surface of the first heat-joining layer and a surface of the second heat-joining layer on a side opposite to the first heat-joining layer side by the joining material. Therefore, layer structures in contact with each other in the panel body are favorably bonded to each other by the joining material.

In addition, similar to the panel body described above, since the base materials of the surface layers respectively exposed to the front and the rear of the panel body do not melt or deteriorate at the predetermined heating temperature, the organic and warm impression of the panel body due to the base material. Moreover, the panel body is strengthened due to the solidified joining material which has been cooled as described above. Moreover, since a fibrous material is mainly used as a raw material for the panel body, the panel body is constituted inexpensively and simply.

In the panel body described above, the surface layer may contain the joining material. The amount of the joining material in the surface layer may be less than the amount of the joining material in the first heat-joining layer.

In the panel body having such a configuration, when the first heat-joining layer and the second heat-joining layer are heated to the predetermined heating temperature, heat from these heat-joining layers is transferred to adjacent surface layers, so that the joining materials contained in the surface layers melt and gaps between fibers of the base materials in the heat-joining layers adjacent to the surface layers are impregnated with the joining materials. Therefore, the places between the surface layers and the heat-joining layers adjacent to the surface layers are impregnated with the joining materials, and the joining materials are thermally fused with the base materials. The joining material is solidified when it is cooled to a temperature lower than the predetermined heating temperature. Therefore, the bonding strength between the surface layer and the first or second heat-joining layer adjacent to the surface layer and the strength of the panel body in its entirety are enhanced. In addition, since the amount of the joining material in the surface layer is less than the amount of the joining material in the first heat-joining layer, and a main body of the surface layer is formed of the base material, the organic and warm impression of the surface layers exposed to the front and the rear of the panel body is retained.

In the panel body described above, an intermediate layer formed of a fibrous material having a higher melting point than the joining material may be provided between the first heat-joining layer and the second heat-joining layer.

In the panel body having such a configuration, the joining materials are cooled and solidified after gaps of the fibrous material in the intermediate layer are impregnated with the joining materials contained in the first heat-joining layer and the second heat-joining layer at the predetermined heating temperature. Therefore, the intermediate layer is favorably bonded to the first and second heat-joining layers, so that the layer structures in contact with each other in the panel body in its entirety are favorably bonded to each other by the joining material.

In the panel body having such a configuration, the panel body increases in thickness as much as the inserted intermediate layer, so that the impression of the panel body being organic and warm is deepened, and the shock resistance of the panel body is enhanced.

In the panel body described above, the intermediate layer may have a first intermediate layer which is bonded to the first heat-joining layer and a second intermediate layer which is bonded to the second heat-joining layer. A bonding layer may be provided between the first intermediate layer and the second intermediate layer.

In the panel body having such a configuration, even when the intermediate layer is configured to have the first intermediate layer and the second intermediate layer such that the thickness dimension of the intermediate layer in its entirety relatively increases, the first intermediate layer and the second intermediate layer are stably installed in an integrated manner due to the bonding layer provided between the first intermediate layer and the second intermediate layer.

### Effects

According to the present invention, it is possible to provide a panel body which exhibits a predetermined function while giving a worker an organic and warm impression, a partition device using a panel body, a piece of furniture with a top board, and a method for manufacturing a panel body.

According to the present invention, it is possible to provide a panel body which gives a worker an organic and warm impression, has sufficient strength, and can be constituted inexpensively and simply, a partition device using a panel body, a piece of furniture with a top board, and a method for manufacturing a panel body.

According to the present invention, it is possible to provide a partitioning panel body, a partition device, and a piece of furniture with a top board which have a soft texture and can obtain strength required to maintain a shape without using a hard base material, a frame body, or the like.

### Brief Description of Drawings

FIG. 1A is a perspective cross-sectional view showing a panel body according to a first embodiment of the present invention.
FIG. 1B is an enlarged view of a part R in FIG. 1A.
FIG. 2A is a perspective cross-sectional view showing a modification example of the panel body according to the first embodiment of the present invention.
FIG. 2B is an enlarged view of a part R in FIG. 2A.
FIG. 3 is a cross-sectional view showing a configuration of a functional sheet of the panel body shown in FIG. 1.
FIG. 4 is a cross-sectional view showing a first heating step in a method for manufacturing a panel body of the first embodiment and a second embodiment according to the present invention.
FIG. 5 is a cross-sectional view showing a bonding step in the method for manufacturing a panel body of the first embodiment according to the present invention.
FIG. 6 is a front view showing an example of a partition device of the first and second embodiments according to the present invention.
FIG. 7 is a side view showing an example of a piece of furniture with a top board of the first and second embodiments according to the present invention.
FIG. 8A is a perspective cross-sectional view showing a panel body according to the second embodiment of the present invention.
FIG. 8B is an enlarged view of a part R in FIG. 8A.
FIG. 9 is a cross-sectional view showing a bonding step in the method for manufacturing a panel body according to the second embodiment of the present invention.
FIG. 10 is a front view of a partition device which is a modification example of the present invention.
FIG. 11 is a cross-sectional view taken along line A-A in FIG. 10.
FIG. 12 is a cross-sectional view taken along line B-B in FIG. 10.
FIG. 13 is a schematic view showing a step of forming a reinforcing portion of the panel body in the modification example of the partition device.
FIG. 14 is a front view showing an example of a configuration of an intermediate reinforcing portion of the panel body.
FIG. 15 is a front view showing a configuration of another modification example of the modification example of the partition device.
FIG. 16 is a cross-sectional view showing a configuration of the other modification example of the modification example of the partition device.
FIG. 17 is a cross-sectional view showing a configuration of further another modification example of the modification example of the partition device.
FIG. 18 is a side view of a modification example of the piece of furniture with a top board of the present invention.
FIG. 19 is a cross-sectional view taken along line C-C in FIG. 18.

### Description of Embodiments

Hereinafter, a panel body, a partition device using a panel body, a piece of furniture with a top board, and a method for manufacturing a panel body, to which the present invention is applied, will be described.

### (First embodiment)

### <Panel body>

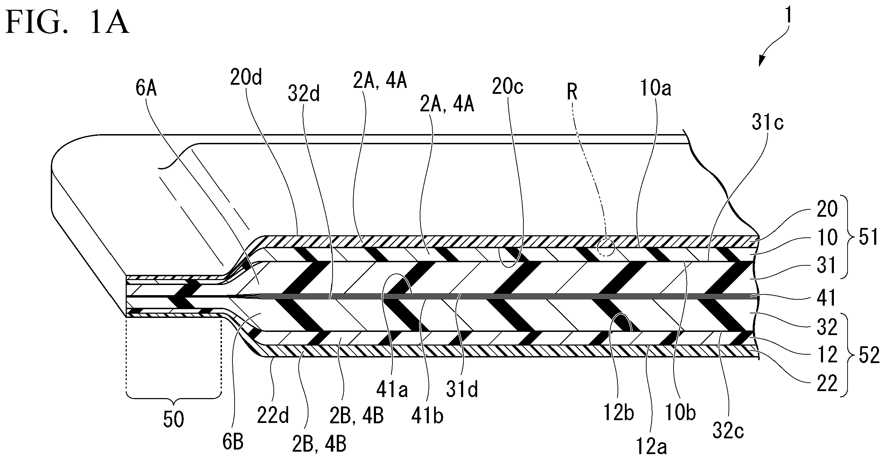

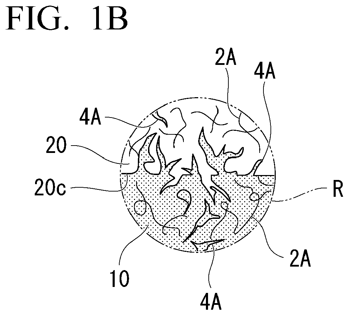

As shown in FIGS. 1A and 1B, a panel body 1 of a first embodiment of the present invention is a panel body used for defining a space such as a working space (not shown). The panel body 1 includes a cushioning layer (first cushioning layer) 51 which contains a fibrous base material 2A, a cushioning layer (second cushioning layer) 52, and a functional sheet 41 which is disposed between these cushioning layers 51 and 52 and has a predetermined function.

The cushioning layer 51 includes a heat-joining layer 10 which contains a fibrous base material 2A and a joining material 4A having a lower melting point than the base material 2A, a surface layer 20 which is bonded to a front surface (one surface) 10a of the heat-joining layer 10 and is formed of a base material 2A, and an intermediate layer 31 which is bonded to a rear surface 10b of the heat-joining layer 10. A bonding surface 20c of the surface layer 20 with respect to the heat-joining layer 10 is impregnated and thermally fused with the joining material 4A. In addition, a bonding surface 31c of the intermediate layer 31 with respect to the heat-joining layer 10 is also impregnated and thermally fused with the joining material 4A.

The cushioning layer 52 has approximately the same configuration as the cushioning layer 51 and includes a heat-joining layer (second heat-joining layer) 12 which contains a fibrous base material 2B and a joining material 4B having a lower melting point than the base material 2B, a surface layer 22 which is bonded to a front surface (one surface) 12a of the heat-joining layer 12 and is formed of a base material 2B, and an intermediate layer 32 which is bonded to a rear surface (the other surface) 12b of the heat-joining layer 12. A bonding surface 22c of the surface layer 22 with respect to the heat-joining layer 12 is impregnated and thermally fused with the joining material 4B. A bonding surface 32c of the intermediate layer 32 with respect to the heat-joining layer 12 is also impregnated and thermally fused with the joining material 4A.

The surface layers 20 and 22 are layers giving the cushioning layers 51 and 52 an organic and warm impression due to the base materials 2A and 2B by being disposed on the outermost sides of the panel body 1 and being formed of the fibrous base materials 2A and 2B, respectively.

The surface layers 20 and 22 may contain additives, coloring agents, color formers, and other materials within a range not affecting the inherent texture of fibers of the base materials 2A and 2B.

Fibers constituting the base materials 2A and 2B are not particularly limited. The fibers need only be able to be impregnated with the joining materials 4A and 4B. Examples thereof include fibers formed of polyester, polypropylene, polyethylene, or the like, glass fibers, nylon fibers, carbon fibers, aramid fibers, or the like. It is preferable to use polyester fibers, nylon fibers, or polypropylene fibers as fibers forming the base materials 2A and 2B, because they are excellent in decorativeness, formability, texture, and availability. Examples of the base materials 2A and 2B include materials woven from the above fibers with gaps therebetween, and materials constituted of the above fibers intertwined with each other without being woven (so-called non-woven fabric). The kind of fibers forming the base material 2A may be the same as the kind of fibers forming the base material 2B or may differ from the kind of fibers forming the base material 2B.

The thicknesses of the surface layers 20 and 22 are not particularly limited and are set within an appropriate range. The thickness of the surface layer 20 may be the same as the thickness of the surface layer 22 or may differ from the thickness of the surface layer 22.

The temperature when the surface layers 20 and 22 are heated is preferably 180°C or more and 280°C or less and is more preferably 220°C or more and 260°C or less, for example.

The heat-joining layers 10 and 12 are layers disposed closer to the inner part of the panel body 1 than the surface layers 20 and 22 and having strength due to the hardened joining materials 4A and 4B by containing the joining materials 4A and 4B in addition to the base materials 2A and 2B, respectively. The heat-joining layers 10 and 12 serve as a core of the panel body 1.

The heat-joining layers 10 and 12 may contain additives, color formers, and other materials within a range not affecting the behavior of the joining materials 4A and 4B when the heat-joining layers 10 and 12 are heated or cooled.

The joining materials 4A and 4B are not particularly limited. The joining materials 4A and 4B need only have melting points at least lower than the melting points of the base materials 2A and 2B such that the base material 2A or the base material 2B can be impregnated therewith. However, the joining materials 4A and 4B can include any materials such as fibrous materials and granular materials as long as the materials are softened and can move into gaps between fibers in the base materials 2A and 2B when they are heated to a temperature equal to or higher than their melting point, and as long as the materials are hardened when they are cooled to a temperature lower than their melting point. Examples of such materials include thermoplastic resins, thermoplastic fibers, thermoset resins, and thermoset fibers. It is preferable to use low melting-point polyester or low melting-point polyethylene as the joining materials 4A and 4B. A material of "low melting-point polyester" indicates a polyester compound or the like having polyester or polyester which has, as a main body, a melting point lower than the melting point of polyester forming the base materials 2A and 2B. Specifically, when the base materials 2A and 2B are formed of polyester of high purity, recycled polyester in which impurities are incorporated during reuse or the like and which has a lower melting point than polyester of high purity can be applied as the joining materials 4A and 4B. Similarly, a material of "low melting-point polyethylene" indicates a polyethylene compound or the like having polyethylene or polyethylene which has, as a main body, a melting point lower than the melting point of polyethylene capable of forming the base materials 2A and 2B. When the base materials 2A and 2B and the joining materials 4A and 4B are formed of materials of the same kind in this manner, the degree of joining and affinity between the heat-joining layer 10 and the surface layer 20 and the degree of joining and affinity between the heat-joining layer 12 and the surface layer 22 are enhanced.

The difference between the melting point of the base material 2A and the melting point of the joining material 4A and the difference between the melting point of the base material 2B and the melting point of the joining material 4B are not particularly limited and are set within an appropriate range. For example, when low melting-point polyester is used as the joining materials 4A and 4B, the melting point of the low melting-point polyester is preferably 100°C or more and 140°C or less.

The amount of the joining material 4A in the heat-joining layer 10 and the amount of the joining material 4B in the heat-joining layer 12 are preferably 30 mass% or more and 50 mass% or less and are more preferably 35 mass% or more and 45 mass% or less.

The thicknesses of the heat-joining layers 10 and 12 are not particularly limited and are set within an appropriate range. The thickness of the heat-joining layer 10 may be the same as the thickness of the heat-joining layer 12 or may differ from the thickness of the heat-joining layer 12.

In the configuration described above, the bonding surface 20c of the surface layer 20 is impregnated and thermally fused with the joining material 4A from the heat-joining layer 10, and the bonding surface 22c of the surface layer 22 is impregnated and thermally fused with the joining material 4B from the heat-joining layer 12.

The surface layer 20 contains the joining material 4A in addition to the base material 2A, and the surface layer 22 contains the joining material 4B in addition to the base material 2B. However, the amount of the joining material 4A in the surface layer 20 is less than the amount of the joining material 4A in the heat-joining layer 10 and is an amount to the extent that the inherent texture of fibers on the front surface of the panel body 1 after being formed can be maintained. In addition, the amount of the joining material 4B in the surface layer 22 is less than the amount of the joining material 4B in the heat-joining layer 12 and is an amount to the extent that the inherent texture of fibers on the front surface of the panel body 1 after being formed can be maintained. In such a configuration, the front surface 10a of the heat-joining layer 10 is also impregnated and thermally fused with the joining material 4A from the surface layer 20, and the front surface 12c of the heat-joining layer 12 is also impregnated and thermally fused with the joining material 4B from the surface layer 22.

The amount of the joining material 4A in the surface layer 20 and the amount of the joining material 4B in the surface layer 22 are preferably 5 mass% or more and 20 mass% or less and are more preferably 7 mass% or more and 15 mass% or less.

The intermediate layers 31 and 32 are layers which are disposed near the center in a thickness direction of the panel body 1 and give the panel body 1 swelling and shock resistance due to their thicknesses.

The intermediate layer 31 is formed of a fibrous material 6A having a higher melting point than the joining material 4A, and the intermediate layer 32 is formed of a fibrous material 6B having a higher melting point than the joining material 4B.

The fibrous materials 6A and 6B are not particularly limited. The fibrous materials 6A and 6B need only have a higher melting point than the joining materials 4A and 4B as described above such that the fibrous materials 6A and 6B can be impregnated with the joining materials 4A and 4B. Examples of the fibrous materials 6A and 6B include materials similar to the base materials 2A and 2B, glass fibers, miscellaneous fibers, other general chemical fibers, rubbers, resin foams, and honeycomb structures. The fibrous material 6A may be the same as fibers forming the base materials 2A and 2B or the fibrous material 6B or may differ from these fibers. The fibrous material 6B may be the same as fibers forming the base materials 2A and 2B or the fibrous material 6A or may differ from these fibers.

The thicknesses of the intermediate layers 31 and 32 are not particularly limited and are set within an appropriate range. The thickness of the intermediate layer 31 may be the same as the thickness of the intermediate layer 32 or may differ from the thickness of the surface layer 22.

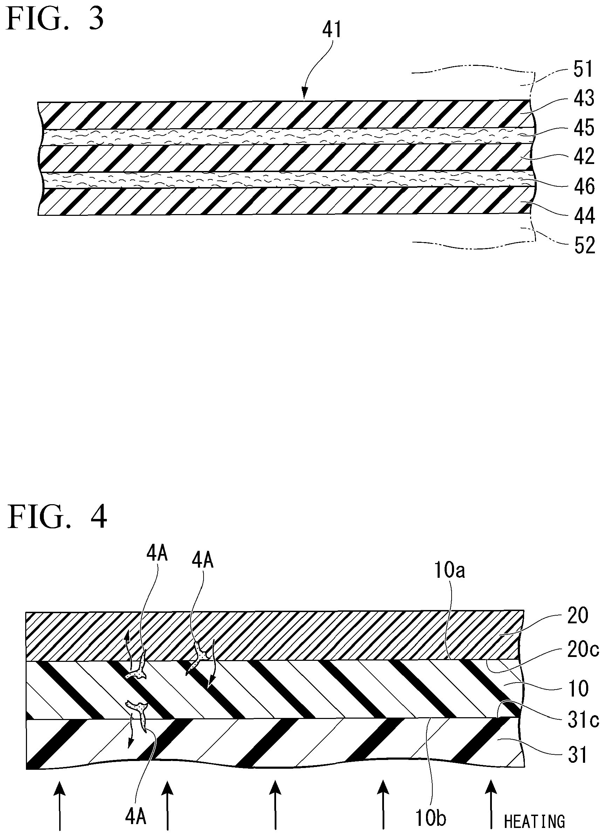

As shown in FIG. 3, the functional sheet 41 includes a functional layer 42 which has the predetermined function, a bonding layer (first bonding layer) 43 which is disposed between the functional layer 42 and the cushioning layer 51, and a bonding layer (second bonding layer) 44 which is disposed between the functional layer 42 and the cushioning layer 52. Moreover, the functional sheet 41 includes a function-enhancing layer (first function-enhancing layer) 45 which is disposed between the functional layer 42 and the bonding layer 43, and a function-enhancing layer (second function-enhancing layer) 46 which is disposed between the functional layer 42 and the bonding layer 44.

The predetermined function of the functional layer 42 is not particularly limited. The predetermined function thereof need only be a function required for the panel body 1 used for defining a space such as a working space. Examples thereof include a sound insulation function, a waterproofing function, a moisture absorption function, a magnetization function, an antibacterial function, a deodorization function, a flame proofing function, a flame retardation function, an antistatic function, and a shock absorption function.

If the predetermined function is a sound insulation function, it is preferable that the functional layer 42 be formed of polyamide, nylon, rubbers, urethane, polyethylene, polypropylene, polyester, or the like.

Particularly, if the functional layer 42 is formed of polyamide, the functional sheet 41 having a sound insulation function is easily realized, so that a cost reduction in the functional sheet 41 and the panel body 1 is achieved.

The thickness of the functional layer 42 is suitably set in consideration of the kind and the like of the material of the functional layer 42 such that the predetermined function can be favorably obtained.

The bonding layer 43 is a layer for bonding the functional layer 42 and the cushioning layer 51 to each other, and the bonding layer 44 is a layer for bonding the functional layer 42 and the cushioning layer 52 to each other.

It is preferable that the bonding layers 43 and 44 be formed of a material having a lower melting point than the base materials 2A and 2B. Accordingly, when the functional sheet 41 is heated to a predetermined heating temperature, the bonding layers 43 and 44 easily melt and are respectively bonded to the cushioning layer 51 and the cushioning layer 52 adjacent thereto. Examples of the above materials forming the bonding layers 43 and 44 include polyethylene, urethane, ethylene-vinyl acetate (EVA) copolymer resins, nylon, and olefin-based resins including a hot melt.

The thicknesses of the bonding layers 43 and 44 are not particularly limited and are set within an appropriate range.

The function-enhancing layers 45 and 46 are layers which can enhance the predetermined function of the functional layer 42 and also function as buffer members between the functional layer 42 and the bonding layers 43 and 44.

Materials forming the function-enhancing layers 45 and 46 need only serve as described above and are not particularly limited. Examples thereof include resins, fibers, urethane, and olefin-based resins which can be applied as a binder.

The thicknesses of the function-enhancing layers 45 and 46 are not particularly limited and are set within an appropriate range.

A reinforcing portion 50 having a small thickness dimension compared to parts other than the peripheral edge portion is provided in a peripheral edge portion of the panel body 1. The reinforcing portion 50 may be provided at a position different from the peripheral edge portion of the panel body 1 or may be provided in a central portion of the panel body 1, for example.

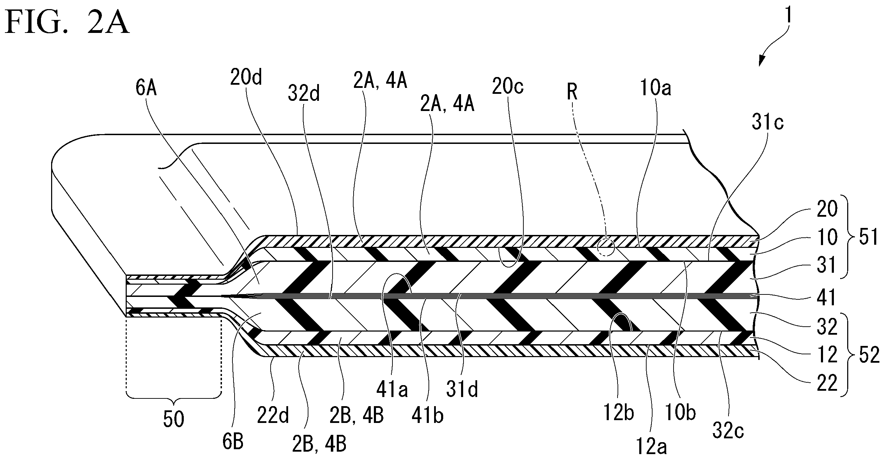

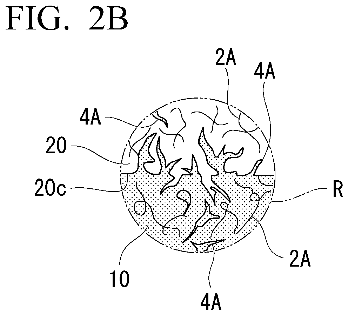

As shown in FIGS. 2A and 2B, the functional sheet 41 may be provided in only a part other than the reinforcing portion 50 without being provided in the reinforcing portion 50. The reinforcing portion 50 is formed by being strongly compressed in a manufacturing method (which will be described below), in order to reduce its thickness dimension. Therefore, even if the functional sheet 41 is omitted, the intermediate layers 31 and 32 in the reinforcing portion 50 are bonded to each other. In addition, since the functional sheet 41 is provided in a main part of the panel body 1 other than the reinforcing portion 50, the predetermined function of the panel body 1 is exhibited.

### <Method for manufacturing panel body>

The method for manufacturing a panel body of the embodiment of the present invention is a method for manufacturing the panel body 1 shown in FIGS. 1A and 1B and has at least a first laminating step, a second laminating step, a first heating step, a second heating step, and a bonding step.

### [First laminating step]

In the present step, first, the rear surface 10b of the heat-joining layer 10 which contains the fibrous base material 2A and the joining material 4A having a lower melting point than the base material 2A is brought into contact with the bonding surface 31c of the intermediate layer 31 formed of the fibrous material 6A, and the heat-joining layer 10 is laminated on the intermediate layer 31.

Next, the surface layer 20 which contains the base material 2A and contains the joining material 4A at a lower content rate than the heat-joining layer 10 is laminated on the front surface 10a of the heat-joining layer 10.

### [Second laminating step]

In the present step, first, the rear surface 12b of the heat-joining layer 12 which contains the fibrous base material 2B and the joining material 4B having a lower melting point than the base material 2B is brought into contact with the bonding surface 31c of the intermediate layer 32 formed of the fibrous material 6B, and the heat-joining layer 12 is laminated on the intermediate layer 32.

Next, the surface layer 22 which contains the base material 2B and contains the joining material 4B at a lower content rate than the heat-joining layer 12 is laminated on the front surface 12a of the heat-joining layer 12.

The present step may be performed after the first laminating step or may be performed in parallel with the first laminating step.

### [First heating step]

The present step is performed after the first laminating step.

In the present step, as shown in FIG. 4, the intermediate layer 31 is heated from a surface 31d (omitted in FIG. 4) of the intermediate layer 31 on a side opposite to the bonding surface 31c as indicated with arrows. In this case, heating is performed at the predetermined heating temperature (that is, at a temperature within a range of the melting point of the joining material 4A to a temperature lower than the melting points of the base material 2A and the fibrous material 6A). Through this step, the heat-joining layer 10 and the surface layer 20 are indirectly heated from the rear surface 10b of the heat-joining layer 10 at the predetermined heating temperature.

Through the present step, the cushioning layer 51 in which the intermediate layer 31, the heat-joining layer 10, and the surface layer 20 are laminated in this order is obtained.

That is, through the present step, the bonding surface 20c of the surface layer 20 is impregnated with the joining material 4A contained in the heat-joining layer 10, and the bonding surface 31c of the intermediate layer 31 is also impregnated therewith. In addition, the front surface 10a of the heat-joining layer 10 is impregnated with the joining material 4A contained in the surface layer 20.

### [Second heating step]

The present step is performed after the second laminating step.

In the present step, the intermediate layer 32 is heated from a surface 32d of the intermediate layer 32 on a side opposite to the bonding surface 32c at the predetermined heating temperature. Through this step, the heat-joining layer 12 and the surface layer 22 are indirectly heated from the rear surface 12b of the heat-joining layer 12 at the predetermined heating temperature.

Through the present step, the cushioning layer 52 in which the intermediate layer 32, the heat-joining layer 12, and the surface layer 22 are laminated in this order is obtained.

That is, through the present step, similar to the first heating step, the bonding surface 22c of the surface layer 22 is impregnated with the joining material 4B contained in the heat-joining layer 12, and the bonding surface 32c of the intermediate layer 32 is also impregnated therewith. In addition, the front surface 12a of the heat-joining layer 12 is impregnated with the joining material 4B contained in the surface layer 22.

### [Bonding step]

It is preferable that the present step be performed at least after the first heating step and the second heating step and be performed in a state of being preheated (for example, to a temperature within a range of approximately 120°C to 130°C) before the cushioning layers 51 and 52 obtained in the first heating step and the second heating step are cooled to a temperature lower than the melting point of the joining material 4A.

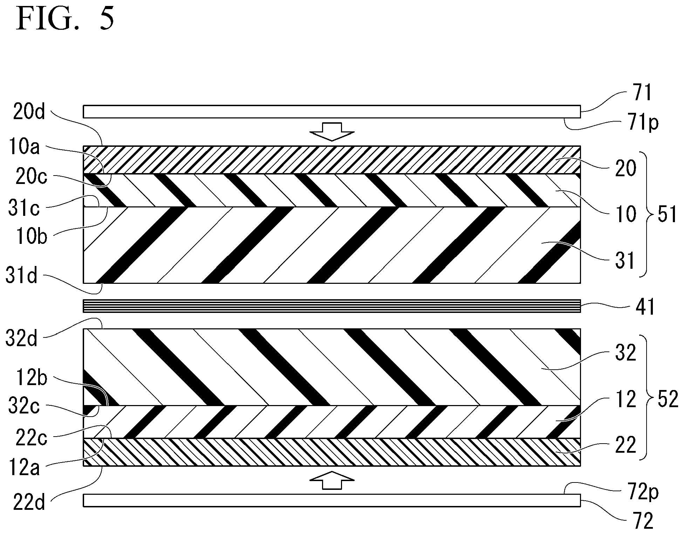

In the present step, first, as shown in FIG. 5, the cushioning layers 51 and 52 are disposed such that the surface 31d of the intermediate layer 31 on a side opposite to the bonding surface 31c in the cushioning layer 51 and the surface 32d of the intermediate layer 32 on a side opposite to the bonding surface 32c in the cushioning layer 52 face each other with the functional sheet 41 interposed therebetween. In such a disposed state, a pressing surface 71p of a pressing plate 71 is brought into contact with a surface 20d side on a side opposite to the bonding surface 20c of the surface layer 20 in the cushioning layer 51, and a pressing surface 72p of a pressing plate 72 is brought into contact with a surface 22d side on a side opposite to the bonding surface 22c of the surface layer 22 in the cushioning layer 52. The pressing plates 71 and 72 are moved in a manner approaching each other in the directions of arrows, thereby obtaining the panel body 1 in which the cushioning layer 52, the functional sheet 41, and the cushioning layer 51 are laminated in this order (pressing step).

That is, in the present step, through the above pressing step, the heat-joining layer 10 and the heat-joining layer 12 are disposed such that the rear surface 10b of the heat-joining layer 10 and the rear surface 12b of the heat-joining layer 12 face each other, and the heat-joining layer 10 and the heat-joining layer 12 are pressed in directions from the heat-joining layer 10 and the heat-joining layer 12 of the front surfaces 10a and 12a toward the rear surfaces 10b and 12b and are thereby bonded to each other.

In addition, in the present step, through preheating of the cushioning layers 51 and 52, the bonding layers 43 and 44 melt, the functional layer 42 and the cushioning layer 51 are bonded to each other, and the functional layer 42 and the cushioning layer 52 are bonded to each other.

### [Reinforcing portion forming step]

The method for manufacturing a panel body of the embodiment of the present invention includes a reinforcing portion forming step in addition to the above steps.

In the present step, the cushioning layers 51 and 52 are strongly pressed in a direction in which they approach each other at a position corresponding to the peripheral edge portion of the panel body 1 such that the thickness dimension of the peripheral edge portion of the panel body 1 becomes less than the thickness dimensions of parts of the panel body 1 other than the peripheral edge portion. Accordingly, the reinforcing portion 50 is formed in the panel body 1 shown in FIGS. 1A and 1B.

The present step may be performed simultaneously with the bonding step. In such a case, for example, a pressing plate having a curved shape or a bent shape in accordance with the forming position of the reinforcing portion 50 may be used. The method for forming the reinforcing portion 50 is not particularly limited.

### <Partition device>

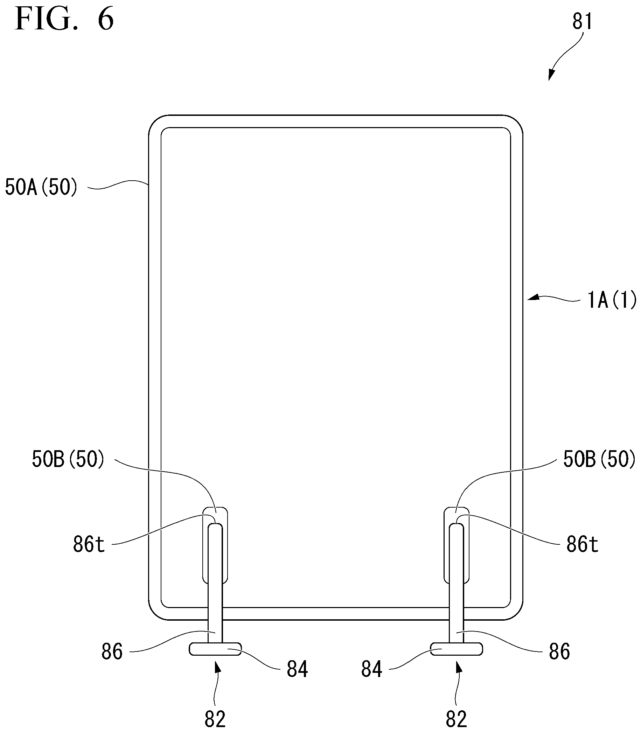

As shown in FIG. 6, a partition device 81 of the embodiment of the present invention includes a panel body 1A described above and leg portions 82 for disposing the panel body 1A in a direction vertical to the floor surface and for causing the panel body 1A to be able to be grounded.

The panel body 1A is disposed in a state of standing in the vertical direction and is formed to have a rectangular shape when viewed from the front. A reinforcing portion 50A formed to be harder than parts other than the peripheral edge portion as described above is provided in the peripheral edge portion of the panel body 1A. Moreover, two reinforcing portions 50B for attaching the leg portions 82 to the panel body 1A are provided in a lower portion of the panel body 1A.

The leg portion 82 includes a pedestal portion 84 which is installed on the floor surface and extends in a horizontal direction (traverse direction in the paper of FIG. 6), and a support portion 86 which extends upward in the vertical direction from the pedestal portion 84 and of which a tip 86t is attached to the reinforcing portion 50B of the panel body 1A. The tip 86t of the support portion 86 is attached to the reinforcing portion 50B using a bolt, a known attachment tool, or the like.

### <Piece of furniture with top board>

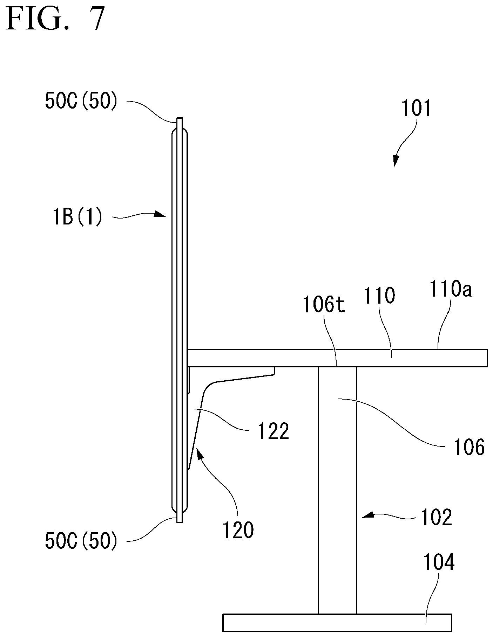

As shown in FIG. 7, a desk device (a piece of furniture with a top board) 101 which is an example of the piece of furniture with a top board of the embodiment of the present invention includes a support portion 102 which is grounded to the floor surface, a top board 110 which is disposed at an upper end of the support portion 102, a panel body 1B which is disposed on the rear side (left side in the paper of FIG. 7) of the top board 110, and an interlocking tool 120 for interlocking the panel body 1B with the top board 110.

The support portion 102 includes a pedestal portion 104 which is installed on the floor surface and extends in the horizontal direction (traverse direction in the paper of FIG. 7), and a support strut 106 which extends upward in the vertical direction from the pedestal portion 104.

The top board 110 is attached to a tip 106t of the support strut 106, and an upper surface 110a is disposed in the horizontal direction.

The panel body 1B is interlocked with the top board 110 by the interlocking tool 120 in a manner perpendicular to the upper surface 110a of the top board 110. In addition, the panel body 1B is interlocked with the top board 110 slightly below from the middle in a height direction in a manner extending upward beyond at least the upper surface 110a of the top board 110.

Operations and effects of the panel body 1, the partition device 81, the desk device 101, and the method for manufacturing a panel body of the present embodiment will be described.

According to the panel body 1 of the present embodiment, since the cushioning layer 51 or the cushioning layer 52 is provided on each of a front surface 41a and a rear surface 41b of the functional sheet 41, the surface layers 20 and 22 (that is, the cushioning layer 51 including the surface layer 20, and the cushioning layer 52 including the surface layer 22) are disposed on the outermost side of the panel body 1, it is possible to give the panel body 1 an organic and warm impression due to the base materials 2A and 2B and to retain the impression. In addition, in the panel body having the configuration described above, since the panel body includes the functional sheet 41, it is possible to exhibit the predetermined function having difficulty in being realized in panel bodies in the related art using a surface layer such as cloth.

Regarding the predetermined function, a function, including a sound insulation function, which can be manifested by a sheet-shaped material as the functional sheet 41 can be extensively selected. Accordingly, the function of the panel body 1 can be extensively set, and the range of utilizing the panel body 1 can be expanded.

In addition, according to the panel body 1 of the present embodiment, when the heat-joining layers 10 and 12 are heated to the predetermined heating temperature, heat from the heat-joining layers 10 and 12 is transferred to the surface layers 20 and 22, so that the joining materials 4A and 4B contained in the surface layers 20 and 22 melt and the bonding surfaces 20c and 22c of the surface layers 20 and 22 can be impregnated and thermally fused with the joining materials 4A and 4B. In addition, the joining materials 4A and 4B are solidified when they are cooled to a temperature lower than the predetermined heating temperature. Therefore, the bonding strength between the surface layers 20 and 22 and the heat-joining layers 10 and 12, and the strength of the panel body 1 in its entirety can be enhanced. Accordingly, the panel body 1 can be strengthened while retaining an organic and warm impression of the surface layers 20 and 22.

In addition, according to the panel body 1 of the present embodiment, since the functional sheet 41 includes the functional layer 42 and the bonding layers 43 and 44, the cushioning layers 51 and 52 and the functional layer 42 mainly exhibiting the predetermined function can be easily and favorably bonded to each other.

In addition, according to the panel body 1 of the present embodiment, since the functional sheet 41 further includes the function-enhancing layers 45 and 46, the predetermined function exhibited by the functional layer 42 can be enhanced, and the predetermined function exhibited by the functional sheet 41 in its entirety can be enhanced.

As described above, when the base material is formed of polyester-based fiber, the functional layer 42 is formed of polyamide, and the bonding layers 43 and 44 are formed of polyethylene, the panel body 1 having a sound insulation function can be realized easily at low cost.

In addition, since the partition device 81 and the desk device 101 of the present embodiment include the functional sheet 41 having an organic and warm impression due to the base materials 2A and 2B as described above and exhibiting the predetermined function, it is possible to define a work space on the top board and an external space and to provide the predetermined function within the defined space without overwhelming or annoying a worker in a working space.

In addition, according to the method for manufacturing the panel body 1 of the present embodiment, the joining materials 4A and 4B contained in the heat-joining layers 10 and 12 melt in the first heating step and the second heating step, so that gaps between fibers of the base materials 2A and 2B on the bonding surfaces 20c and 22c of the surface layers 20 and 22 and the intermediate layers 31 and 32 can be impregnated and thermally fused with the joining materials 4A and 4B. In addition, since the joining materials 4A and 4B with which adjacent layer structures are impregnated and thermally fused as described above are solidified in the bonding step, and the cushioning layer 51 including the heat-joining layer 10 and the cushioning layer 52 including the heat-joining layer 12 are pressed to each other in a direction from the front surfaces 10a and 12a of the heat-joining layers 10 and 12 toward the rear surfaces 10b and 12b with the functional sheet 41 interposed therebetween, the bonding layers 43 and 44 melt through preheating, so that the cushioning layer 52, the functional sheet 41, and the cushioning layer 51 can be favorably bonded to each other in this order.

In addition, the panel body 1 having an organic and warm impression due to the fibrous base materials 2A and 2B and exhibiting the predetermined function can be constituted inexpensively and simply.

Hereinabove, an embodiment of the present invention has been described in detail with reference to the drawings. The specific configuration is not limited to this embodiment, and design changes and the like within the scope of the present invention are also included.

For example, a suitable bonding agent may be provided between adjacent layers constituting the panel body 1 described above (for example, between the surface layer 20 and the heat-joining layer 10, or between the bonding layer 43 and the function-enhancing layer 45).

### (Second embodiment)

In a second embodiment, the same reference signs are applied to members which are the same as or similar to those in the first embodiment, and a detailed description thereof will be omitted.

### <Panel body>

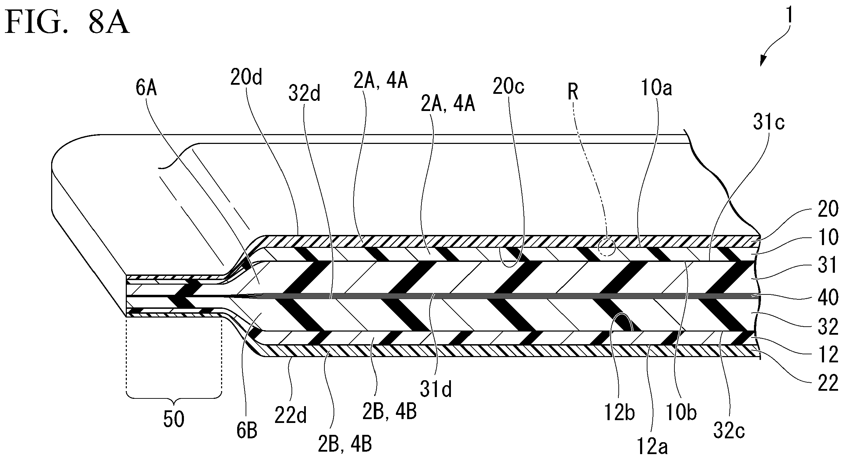

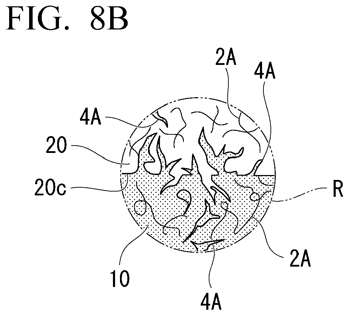

As shown in FIGS. 8A and 8B, a panel body 1 of the second embodiment of the present invention is a panel body used for defining a space within a working space (not shown). The panel body 1 includes a cushioning layer (laminated body) 61 and a cushioning layer (laminated body) 62 which contain the fibrous base material 2A, a heat-joining layer (first heat-joining layer) 10 which is disposed between these laminated bodies 61 and 62 and contains a fibrous base material 2A and a joining material 4A having a lower melting point than the base material 2A, and a heat-joining layer (second heat-joining layer) 12 which includes a fibrous base material 2B and a joining material 4B having a lower melting point than the base material 2B. The surface layer 20 formed of the base material 2A is bonded to a front surface (one surface) 10a of the heat-joining layer 10, and a bonding surface 20c of the surface layer 20 with respect to the heat-joining layer 10 is impregnated with the joining material 4A.

Similarly, the surface layer 22 formed of the base material 2A is bonded to a front surface (one surface) 12a of the heat-joining layer 12, and a bonding surface 22c of the surface layer 22 with respect to the heat-joining layer 12 is impregnated with the joining material 4B.

The panel body 1 includes an intermediate layer (first intermediate layer) 31 and an intermediate layer (second intermediate layer) 32 between the heat-joining layer 10 and the heat-joining layer 12. The intermediate layer 31 is bonded to a rear surface (the other surface) 10b of the heat-joining layer 10, and a bonding surface 31c of the intermediate layer 31 with respect to the heat-joining layer 10 is impregnated with the joining material 4A. Similarly, the intermediate layer 32 is bonded to a rear surface (the other surface) 12b of the heat-joining layer 12, and a bonding surface 32c of the intermediate layer 32 with respect to the heat-joining layer 12 is impregnated with the joining material 4A. A bonding layer 40 is provided between the intermediate layer 31 and the intermediate layer 32.

The bonding layer 40 is provided to bond the intermediate layers 31 and 32 to each other. The bonding layer 40 may be constituted of a sheet-shaped bonding layer or may be constituted of a bonding agent coating the surface 31d of the intermediate layer 31 on a side opposite to the bonding surface 31c or the surface 32d of the intermediate layer 32 on a side opposite to the bonding surface 32c.

Examples of materials for forming the sheet-shaped bonding layer and the bonding agent described above include polyester, polyethylene, and polyamide including a hot melt having a lower melting point than the joining materials 4A and 4B. In addition, examples of the sheet-shaped bonding material layer described above include polyester-based non-woven fabric including a hot melt.

The thickness of the bonding layer 40 is not particularly limited and is set within an appropriate range.

### <Method for manufacturing panel body>

The method for manufacturing a panel body of the second embodiment of the present invention is a method for manufacturing the panel body 1 shown in FIGS. 8A and 8B and has at least a first laminating step, a second laminating step, a first heating step, a second heating step, and a bonding step. However, in the method for manufacturing a panel body, since the first laminating step and the second laminating step are similar to those in the first embodiment, only the first heating step, the second heating step, the bonding step, and a reinforcing portion forming step will be described.

### [First heating step]

The present step is performed after the first laminating step.

In the present step, as shown in FIG. 4, the intermediate layer 31 is heated from the surface 31d (omitted in FIG. 4) of the intermediate layer 31 on a side opposite to the bonding surface 31c as indicated with arrows. In this case, heating is performed at the predetermined heating temperature (that is, at a temperature within a range of the melting point of the joining material 4A to a temperature lower than the melting points of the base material 2A and the fibrous material 6A). Through this step, the heat-joining layer 10 and the surface layer 20 are indirectly heated from the rear surface 10b of the heat-joining layer 10 at the predetermined heating temperature.

Through the present step, the laminated body (first cushioning layer) 61 in which the intermediate layer 31, the heat-joining layer 10, and the surface layer 20 are laminated in this order is obtained.

That is, through the present step, the bonding surface 20c of the surface layer 20 is impregnated with the joining material 4A contained in the heat-joining layer 10, and the bonding surface 31c of the intermediate layer 31 is also impregnated therewith. In addition, the front surface 10a of the heat-joining layer 10 is impregnated with the joining material 4A contained in the surface layer 20.

### [Second heating step]

The present step is performed after the second laminating step.

In the present step, the intermediate layer 32 is heated from the surface 32d of the intermediate layer 32 on a side opposite to the bonding surface 32c at the predetermined heating temperature. Through this step, the heat-joining layer 12 and the surface layer 22 are indirectly heated from the rear surface 12b of the heat-joining layer 12 at the predetermined heating temperature.

Through the present step, the laminated body (second cushioning layer) 62 in which the intermediate layer 32, the heat-joining layer 12, and the surface layer 22 are laminated in this order is obtained.

That is, through the present step, similar to the first heating step, the bonding surface 22c of the surface layer 22 is impregnated with the joining material 4B contained in the heat-joining layer 12, and the bonding surface 32c of the intermediate layer 32 is also impregnated therewith. In addition, the front surface 12a of the heat-joining layer 12 is impregnated with the joining material 4B contained in the surface layer 22.

### [Bonding step]

It is preferable that the present step be performed at least after the first heating step and the second heating step and be performed before the laminated bodies 61 and 62 obtained in the first heating step and the second heating step are cooled to a temperature lower than the melting point of the joining material 4A.

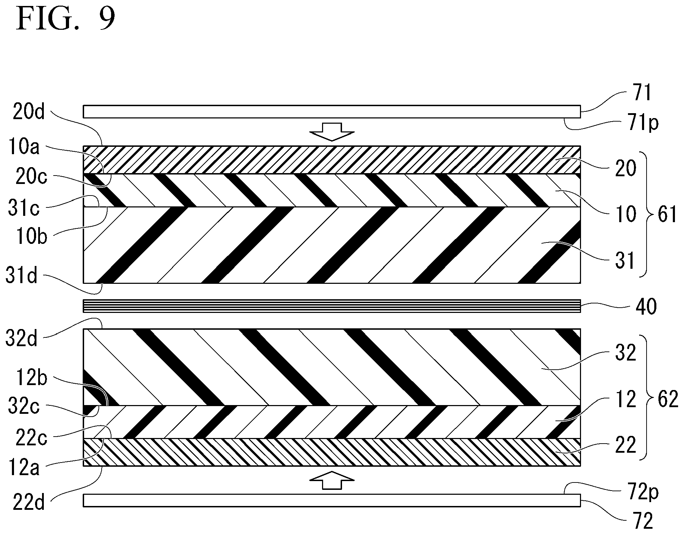

In the present step, first, as shown in FIG. 9, the laminated bodies 61 and 62 are disposed such that the surface 31d of the intermediate layer 31 on a side opposite to the bonding surface 31c of the laminated body 61 and the surface 32d on a side opposite to the bonding surface 32c of the intermediate layer 32 of the laminated body 62 face each other with the bonding layer 40 interposed therebetween. In such a disposed state, the pressing surface 71p of the pressing plate 71 is brought into contact with the surface 20d side on a side opposite to the bonding surface 20c of the surface layer 20 in the laminated body 61, and the pressing surface 72p of the pressing plate 72 is brought into contact with the surface 22d side on a side opposite to the bonding surface 22c of the surface layer 22 in the laminated body 62. The pressing plates 71 and 72 are moved in a manner approaching each other in the directions of the arrows, thereby obtaining the panel body 1 in which the laminated body 62, the bonding layer 40, and the laminated body 61 are laminated in this order (pressing step).

That is, in the present step, through the above pressing step, the heat-joining layer 10 and the heat-joining layer 12 are disposed such that the rear surface 10b of the heat-joining layer 10 and the rear surface 12b of the heat-joining layer 12 face each other, and the heat-joining layer 10 and the heat-joining layer 12 are pressed in directions from the heat-joining layer 10 and the heat-joining layer 12 of the front surfaces 10a and 12a toward the rear surfaces 10b and 12b and are thereby bonded to each other.

### [Reinforcing portion forming step]

The method for manufacturing a panel body of the second embodiment of the present invention includes the reinforcing portion forming step in addition to the above steps.

In the present step, the laminated bodies 61 and 62 are strongly pressed in a direction in which approach each other at a position corresponding to the peripheral edge portion of the panel body 1 such that the thickness dimension of the peripheral edge portion of the panel body 1 becomes less than the thickness dimensions of parts of the panel body 1 other than the peripheral edge portion. Accordingly, the reinforcing portion 50 is formed in the panel body 1 shown in FIGS. 8A and 8B.

The present step may be performed simultaneously with the bonding step. In such a case, for example, a pressing plate having a curved shape or a bent shape in accordance with the forming position of the reinforcing portion 50 may be used. The method for forming the reinforcing portion 50 is not particularly limited.

### <Partition device>

Since the partition device 81 of the second embodiment of the present invention is similar to that of the first embodiment, an explanation thereof will be omitted here.

### <Piece of furniture with top board>

Since the desk device (the piece of furniture with a top board) 101 which is an example of the piece of furniture with a top board of the second embodiment of the present invention is similar to that of the first embodiment, an explanation thereof will be omitted here.

Operations and effects of the panel body 1, the partition device 81, the desk device 101, and the method for manufacturing a panel body of the present embodiment will be described.

According to the panel body 1 of the present embodiment, when the heat-joining layer 10 and the heat-joining layer 12 are heated to the predetermined heating temperature, the joining materials 4A and 4B contained in the heat-joining layers 10 and 12 melt, so that the bonding surfaces 20c and 22c of the surface layers 20 and 22 and the bonding surfaces 31c and 32c of the intermediate layers 31 and 32 adjacent to the heat-joining layers 10 and 12 can be impregnated and thermally fused with the joining materials 4A and 4B. In addition, due to the solidified joining materials 4A and 4B which have been cooled to a temperature lower than the predetermined heating temperature after the joining materials 4A and 4B are thermally fused with these bonding surfaces adjacent to the heat-joining layers 10 and 12, the heat-joining layer 10 and the surface layer 20 can be favorably bonded to the intermediate layer 31, and the heat-joining layer 12 and the surface layer 22 can be favorably bonded to the intermediate layer 32.

In addition, the organic and warm impression of the panel body 1 due to the base materials 2A and 2B can be retained without making the base materials 2A and 2B contained in the surface layers 20 and 22 respectively exposed to the front and the rear of the panel body 1 melt or deteriorate at the predetermined heating temperature. Moreover, since the joining materials 4A and 4B are hardened to a temperature lower than the predetermined heating temperature, the panel body 1 can be strengthened. Moreover, since a fibrous material is mainly used as a raw material for the panel body 1, the panel body 1 can be constituted inexpensively and simply.

In addition, according to the panel body 1 of the present embodiment, when the surface layers 20 and 22 are heated through the heat-joining layers 10 and 12 at the predetermined heating temperature, the joining materials 4A and 4B contained in the surface layers 20 and 22 melt, so that the front surfaces 10a and 12a of the heat-joining layers 10 and 12 adjacent to these surface layers 20 and 22 can be impregnated and thermally fused with the joining materials 4A and 4B. Therefore, the places between the surface layers 20 and 22 and the heat-joining layers 10 and 12 respectively adjacent thereto are impregnated and thermally fused with the joining materials 4A and 4B, and the joining materials 4A and 4B can be solidified through cooling thereafter. Therefore, the bonding strength between the surface layers 20 and 22 and the heat-joining layers 10 and 12 respectively adjacent thereto and the strength of the panel body 1 in its entirety can be enhanced. In addition, since the amounts of the joining materials 4A and 4B in the surface layers 20 and 22 are less than the amounts of the joining materials 4A and 4B in the heat-joining layers 10 and 12, and main bodies of the surface layers 20 and 22 are formed of the base materials 2A and 2B, the organic and warm impression of the surface layers 20 and 22 can be retained.

In addition, according to the panel body 1 of the present embodiment, the panel body 1 increases in thickness as much as the intermediate layers 31 and 32 inserted as the intermediate layers between the heat-joining layers 10 and 12, so that the impression of the panel body 1 being organic and warm is deepened, and the shock resistance of the panel body 1 can be enhanced.

In addition, according to the panel body 1 of the present embodiment, even when the intermediate layer is configured to have the intermediate layers 31 and 32 such that the thickness dimension in its entirety relatively increases, the intermediate layers 31 and 32 can be stably installed due to the bonding layer 40 provided between the intermediate layers 31 and 32.

In addition, the partition device 81 and the desk device 101 of the present embodiment include the panel bodies 1A and 1B having an organic and warm impression due to the base materials 2A and 2B as described above and sufficient strength due to the hardened joining materials 4A and 4B. Therefore, in a working space, a work space on the top board and an external space are defined and a view of a worker can be blocked without overwhelming or annoying the worker.

In addition, according to the method for manufacturing the panel body 1 of the present embodiment, the joining materials 4A and 4B contained in the heat-joining layers 10 and 12 melt in the first heating step and the second heating step, so that gaps between fibers of the base materials 2A and 2B on the bonding surfaces 20c and 22c of the surface layers 20 and 22 and the intermediate layers 31 and 32 can be impregnated and thermally fused with the joining materials 4A and 4B, and then the joining materials 4A and 4B can be solidified. In addition, since the joining materials 4A and 4B with which adjacent layer structures are impregnated as described above are hardened in the bonding step, and the laminated body 61 including the heat-joining layer 10 and the laminated body 62 including the heat-joining layer 12 are pressed in directions from the front surfaces 10a and 12a of the heat-joining layers 10 and 12 toward the rear surfaces 10b and 12b, the surface layers 20 and 22, the heat-joining layers 10 and 12, the intermediate layers 31 and 32, and the bonding layer 40 can be favorably bonded to each other in the order as in the layer structure shown in FIGS. 8A and 8B as an example.

In addition, the panel body 1 having an organic and warm impression due to the fibrous base materials 2A and 2B and sufficient strength can be constituted inexpensively and simply.

Hereinabove, the second embodiment of the present invention has been described in detail with reference to the drawings. The specific configuration is not limited to this embodiment, and design changes and the like within the scope of the present invention are also included.

For example, the panel body 1 does not have to have the intermediate layers 31 and 32 or the bonding layer 40 such that the heat-joining layers 10 and 12 are directly joined. Even in such a configuration, the rear surface 12b of the heat-joining layer 12 is impregnated with the joining material 4A contained in the heat-joining layer 10, and the rear surface 10b of the heat-joining layer 10 is impregnated with the joining material 4B contained in the heat-joining layer 12. Therefore, the surface layers 20 and 22 and the heat-joining layers 10 and 12 are favorably bonded to each other, so that a panel body having effects similar to those of the panel body 1 can be obtained.

In addition, in the panel body described above, the heat-joining layers 10 and 12 may be integrated to be a single heat-joining layer. Even in such a configuration, the bonding surfaces 20c and 22c of the surface layers 20 and 22 adjacent to the heat-joining layer are impregnated with a joining material contained in the single heat-joining layer. Therefore, the surface layers 20 and 22 and the single heat-joining layer are favorably bonded to each other, so that a panel body having effects similar to those of the panel body 1 can be obtained.

### (Modification example 1 of partition device)

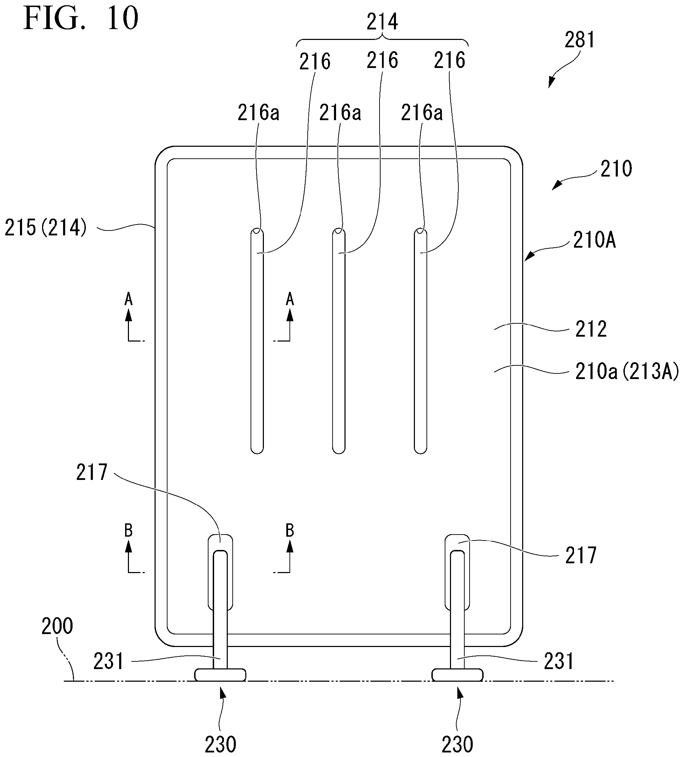

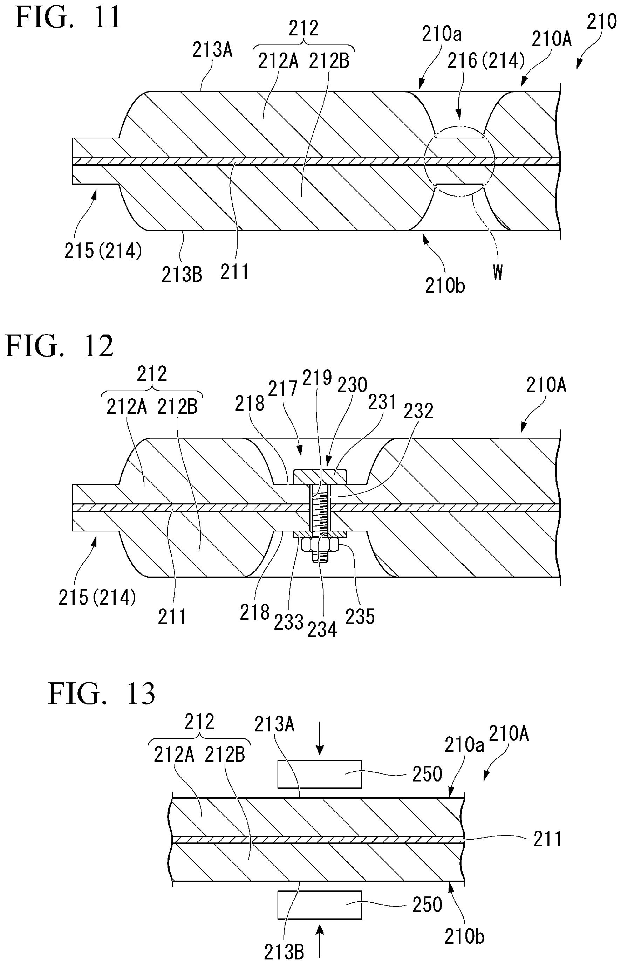

A modification example of the partition device of the present invention will be described. FIG. 10 is a front view of the partition device which is the modification example of the present invention. FIG. 11 is a cross-sectional view taken along line A-A in FIG. 10. FIG. 12 is a cross-sectional view taken along line B-B in FIG. 10.

As shown in FIG. 10, for example, a partition device 281 in the present modification example is a self-standing device mounted on a floor surface 200.

The partition device 281 includes a panel body 210 which serves as a partition partitioning a space, and leg members 230 which are fixed to the panel body 210 and can be grounded to the floor surface 200.

As shown in FIGS. 10 and 11, the panel body 210 is constituted of a laminated body 210A which includes a cushioning member 212 bonded due to a bonding agent layer 211. In addition, the panel body 210 has a reinforcing portion 214 (a peripheral edge-reinforcing portion 215 and intermediate reinforcing portions 216) configured to be harder than other portions in a part of the panel body 210. Moreover, as shown in FIGS. 10 and 12, the panel body 210 has attachment portions 217 for attaching the leg members 230 to the panel body 210.

The bonding agent layer 211 contains thermoplastic resins. As an example, the bonding agent layer 211 is formed of polyester-based non-woven fabric including a hot melt. In the panel body 210 in its entirety, the bonding agent layer 211 is welded to the cushioning member 212 in portions including at least the reinforcing portion 214 and the attachment portion 217 of the panel body 210.

The cushioning member 212 has a first cushioning member 212A and a second cushioning member 212B. The first cushioning member 212A and the second cushioning member 212B have soft plate shapes constituted of porous members such as a felt or a sponge. A surface 213A of the first cushioning member 212A on a side opposite to a surface in contact with the bonding agent layer 211 constitutes a front surface 210a of the panel body 10.

A surface 213B of the second cushioning member 212B on a side opposite to a surface in contact with the bonding agent layer 211 constitutes a rear surface 210b of the panel body 210.

The first cushioning member 212A and the second cushioning member 212B are formed of non-woven fabric having a porous shape in a state in which fibers are intertwined with each other. The materials of the first cushioning member 212A and the second cushioning member 212B are not particularly limited. For example, the materials of the first cushioning member 212A and the second cushioning member 212B may be selected in consideration of the design, the texture, and the like of the front surface 210a and the rear surface 210b of the panel body 210. As an example, the first cushioning member 212A and the second cushioning member 212B are formed of non-woven fabric in which polyester fibers are intertwined with each other. The first cushioning member 212A and the second cushioning member 212B may be formed of a felt.

The reinforcing portion 214 of the panel body 210 is a portion having a higher density than portions other than the reinforcing portion 214 due to the cushioning member 212 held by the bonding agent layer 211 in a compressed state. The thermoplastic resins forming the bonding agent layer 211 enter holes of the cushioning member 212 in a compressed state (with gaps between fibers forming the cushioning member 212).

The method for forming the reinforcing portion 214 will be described. FIG. 13 is a schematic view showing a step of forming the reinforcing portion 214 of the panel body 210 of the partition device 281.

For example, a device for forming the reinforcing portion 214 has a heating device (not shown) for heating the laminated body 210A, and pressing members 250 (refer to FIG. 13) having the laminated body 210A interposed therebetween from both sides in the lamination direction of the laminated body 210A. In the present modification example, as shown in FIG. 13, first, the first cushioning member 212A and the second cushioning member 212B are laminated such that the bonding agent layer 211 is positioned therebetween, and the laminated body 210A in its entirety is heated by the heating device to a temperature exceeding the melting point of the thermoplastic resins contained in the bonding agent layer 211. The thermoplastic resins contained in the bonding agent layer 211 melts while being heated by the heating device and enter gaps between fibers forming the first cushioning member 212A and the second cushioning member 212B.

In such a state in which the laminated body 210A is heated, subsequently, the laminated body 210A is interposed between the pressing members 250. When the laminated body 210A is interposed between the pressing members 250, the pressing members 250 hold the laminated body 210A in a state in which the cushioning member 212 is compressed. When the pressing members 250 come into contact with the surfaces 213A and 213B which become the front surface 210a and the rear surface 210b of the laminated body 210A, the temperature in the vicinity of the surfaces 213A and 213B drops, but the temperature exceeds the melting point of the thermoplastic resins at a portion where the bonding agent layer 211 is positioned.

Subsequently, in a state in which the laminated body 210A is interposed between the pressing members 250, the laminated body 210A in its entirety is maintained until the temperature thereof becomes lower than the melting point of the thermoplastic resins. The thermoplastic resins forming the bonding agent layer 211 of the laminated body 210A flow out to the cushioning member 212. Then, when the temperature of the laminated body 210A drops to a temperature lower than the melting point of the thermoplastic resins, the thermoplastic resins are hardened in a state in which the cushioning member 212 of the laminated body 210A is compressed. The thermoplastic resins hardened as described above connect fibers such that fibers forming the cushioning member 212 are in a state of approaching each other. Therefore, a portion in which the cushioning member 212 is compressed has a higher density than other portions and is formed hard. A portion maintained in a state in which the cushioning member 212 is compressed as described above becomes the reinforcing portion 214.

In the present modification example, since the bonding agent layer 211 extends throughout the whole region of the laminated body 210A as an intermediate layer in the laminated body 210A, the reinforcing portion 214 can be formed in an arbitrary portion of the laminated body 210A.

For example, as shown in FIG. 10, the reinforcing portion 214 (peripheral edge-reinforcing portion 215) can be formed in a portion which becomes a peripheral edge of the panel body 210. In this case, for example, the panel body 210 can be molded to have a plate shape or a desired shape by forming the reinforcing portion 214 continuously extending in the peripheral edge portion of the panel body 210. In addition, in a case of the panel body 210 having a curved shape, in order to maintain the curved shape of the panel body 210, the panel body 210 includes the peripheral edge-reinforcing portion 215 formed by using a pressing member (not shown) having a shape restricting the curved shape of the panel body 210. In this case, the melted thermoplastic resins are hardened, thereby forming the peripheral edge-reinforcing portion 215 which can maintain the panel body 210 in a curved shape.

In addition, for example, as shown in FIGS. 10 and 11, the reinforcing portion 214 (intermediate reinforcing portions 216) can be formed in a region closer to the inner side than the portion which becomes the peripheral edge of the panel body 210, when viewed in the lamination direction of the laminated body 210A. For example, in a portion where the reinforcing portion 214 is positioned as indicated with a reference sign w in FIG. 11, the first cushioning member 212A and the second cushioning member 212B are welded to each other due to the thermoplastic resins contained in the bonding agent layer 211. In FIG. 11, the laminated structure of the cushioning member 212 and the bonding agent layer 211 is shown, but details of the welded structure are not shown.

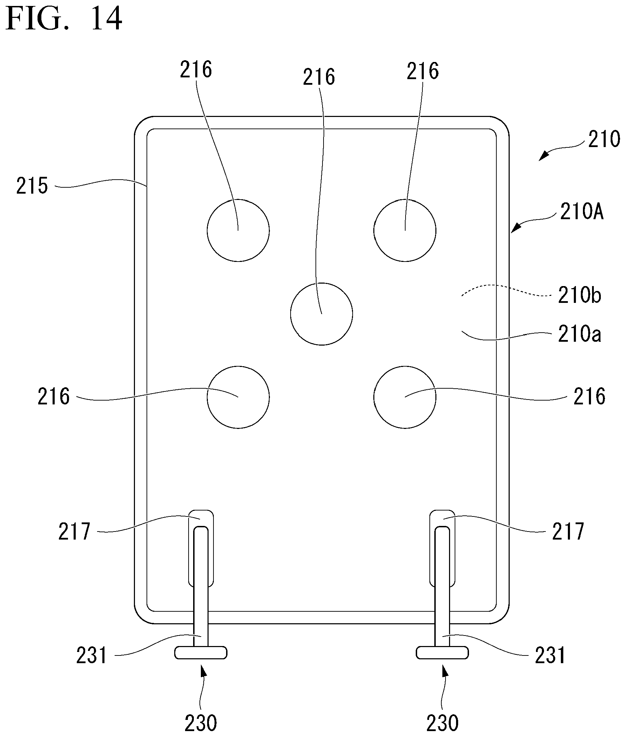

When the intermediate reinforcing portions 216 are provided, for example, as shown in FIG. 10, it is possible to form a plurality of reinforcing portions 214 extending along a straight line extending in a parallel manner away from each other, or for example, as shown in FIG. 14, it is possible to form a plurality of circular intermediate reinforcing portions 216 away from each other when viewed in the lamination direction of the laminated body 210A, in accordance with the strength required for the panel body 210. As an example, when the panel body 210 is installed such that the front surface 210a and the rear surface 210b of the panel body 210 become perpendicular to the floor surface, in order to prevent the panel body 210 from being bent due to the dead weight of the panel body 210 causing the front surface 210a and the rear surface 210b of the panel body 210 to be curved, the panel body 210 includes the plurality of lengthy intermediate reinforcing portions 216 linearly extending in an up-down direction (up-down direction in the paper of FIG. 10) in the installed state.

In addition, as shown in FIG. 10, when viewed in a direction perpendicular to the front surface 210a of the panel body 210, the intermediate reinforcing portion 216 includes a curved contour portion 216a. A contour portion 216a of the intermediate reinforcing portion 216 is a boundary between a portion which is fixed in a compressed state due to the thermoplastic resins and a porous portion which is not fixed due to the thermoplastic resins, in the cushioning member 212. Therefore, since the cushioning member 212 is in a compressed state but is not fixed in this state in a portion on a slightly outer side of the contour portion 216a of the intermediate reinforcing portion 216, the cushioning member 212 has a restoring force tending to return to the original porous state. If the contour portion 216a of the intermediate reinforcing portion 216 has a curved shape, the restoring force of the cushioning member 212 is less likely to be concentrated in a part of the contour portion 216a. Therefore, welding due to the bonding agent layer 211 is less likely to peel off.

The intermediate reinforcing portion 216 may be formed to provide unevenness as design in the laminated body 210A, independently from the functions to reinforce the panel body 210.

As shown in FIGS. 10 and 12, the attachment portion 217 has attachment surfaces 218 for attaching the leg member 230 and a hole portion 219 which is open through the attachment surfaces 218. The attachment portion 217 is formed similar to the above reinforcing portion 214, such that the attachment portion 217 is compressed to have hardness equivalent to that of the reinforcing portion 214. The hole portion 219 provided in the attachment portion 217 is a hole penetrating the laminated body 210A in the thickness direction of the laminated body 210A.

The panel body 210 in the present modification example has attachment portions 217, one each at two places separated from each other.

The attachment portion 217 may be connected to the intermediate reinforcing portion 216 or may be disposed at a position different from the intermediate reinforcing portion 216. In addition, the attachment portion 217 may be connected to the peripheral edge-reinforcing portion 215 or may be disposed at a position different from the peripheral edge-reinforcing portion 215. Moreover, the dimension (second width dimension) of the intermediate reinforcing portion 216 measured in a direction intersecting the separation direction of the attachment portion 217 (up-down direction in the paper in the example of FIG. 10) is longer than the dimension (first width dimension) of the intermediate reinforcing portion 216 measured in the separation direction (traverse direction in the paper in the example of FIG. 10) of the attachment portion 217.

The leg member 230 is fixed to the panel body 210 in a state of being in contact with the attachment surfaces 218 (the front surface 210a and the rear surface 210b of the panel body 210) of the attachment portion 217 and having the panel body 210 interposed therebetween.

The leg member 230 has a leg main body 231 which has a shaft body 232 inserted into the hole portion 219 of the attachment portion 217 and can be grounded to the floor surface, and a fixing member 233 which can be fixed to the shaft body 232. The shaft body 232 of the leg main body 231 has a rod shape in which threads are engraved. A penetration hole 234 in which the shaft body 232 is inserted is formed in the fixing member 233. A nut 235 is screw-fitted to the shaft body 232 in a state in which the shaft body 232 of the leg main body 231 is inserted into the penetration hole 234 of the fixing member 233. Accordingly, the leg main body 231 and the fixing member 233 can be interlocked with each other. Moreover, the nut 235 and the shaft body 232 are fastened to each other such that the attachment portion 217 is interposed between the leg main body 231 and the fixing member 233. Accordingly, the leg member 230 is fixed to the attachment portion 217.

Operations and effects of the panel body 210 and the partition device 281 in the present modification example will be described.

In the panel body 210 in the present modification example, portions, in which the reinforcing portions 214 and the attachment portions 217 shown in FIGS. 11 and 12 are formed, are hard, and other portions have a soft texture due to the cushioning member 212 provided therein. Moreover, due to the peripheral edge-reinforcing portion 215 and the intermediate reinforcing portions 216, the panel body 210 in the present modification example has strength required to maintain the shape of the panel body 210 in a posture in which the panel body 210 is installed, without using a hard base material, a frame body, or the like.

In addition, the reinforcing portion 214 may be disposed in only a portion of the panel body 210 required to have strength or may be disposed in a portion including a part constituting unevenness as design. At this time, since there is no difference in texture between a portion formed to obtain a reinforcement effect and unevenness as design, the degree of freedom of design is high.

In addition, since the contour portions 216a of the intermediate reinforcing portions 216 have a curved shape when viewed in a direction perpendicular to the front surface 210a and the rear surface 210b of the panel body 210, welding in the intermediate reinforcing portions 216 is unlikely to peel off, so that strength degradation or losing shape due to deterioration over time is unlikely to occur.

In addition, since the intermediate reinforcing portions 216 are provided, the panel body 210 can be reinforced such that deformation in which the front surface 210a and the rear surface 210b of the panel body 210 are distorted in a region closer to the inner side than the peripheral edge of the panel body 210 is unlikely to occur. Since the bonding agent layer 211 extends throughout the whole region of the panel body 210, the intermediate reinforcing portion 216 can be formed in an arbitrary portion required to have strength.

In addition, since the bonding agent layer 211 and the cushioning member 212 are welded to each other in the attachment portions 217 which become fixing portions between the leg members 230 and the panel body 210 in a state in which the first cushioning member 212A and the second cushioning member 212B are compressed, it is possible to obtain strength for the panel body 210 fixed to the leg members 230 such that the panel body 210 can stand by itself without using a hard base material, a frame, or the like.

In addition, since the shaft body 232 of the leg member 230 is inserted into the hole portion 219 provided in the attachment portion 217, the leg member 230 can be fixed to the panel body 210 such that the leg member 230 is not misaligned with the panel body 210.

### (Modification example 2 of partition device)

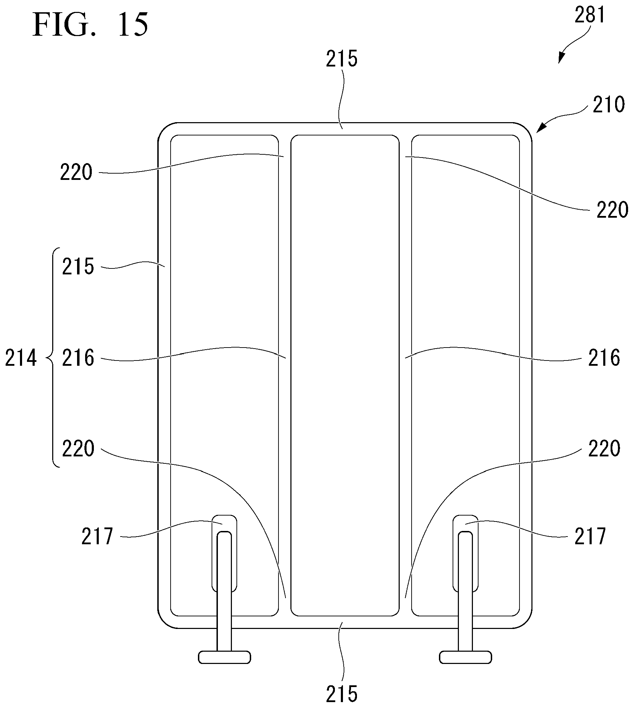

Another modification example of the above partition device will be described. FIG. 15 is a front view showing a configuration of the present modification example.

As shown in FIG. 15, in the present modification example, the reinforcing portion 214 further has connection portions 220 which are formed to connect the intermediate reinforcing portions 216 to the peripheral edge-reinforcing portion 215.

The connection portions 220 are formed in a manner similar to those of the peripheral edge-reinforcing portion 215 and the intermediate reinforcing portions 216 in the above modification example 1. Accordingly, the connection portions 220 are configured to be harder than other portions (equally hard as the peripheral edge-reinforcing portion 215, the intermediate reinforcing portions 216, and the attachment portions 217 in the above modification example 1).

Since the intermediate reinforcing portions 216 and the peripheral edge-reinforcing portion 215 are connected to each other through the connection portions 220, the panel body 210 in the present modification example has higher strength than the panel body 210 in the above modification example 1. In addition, when the strength required for the panel body 210 in the present modification example is equivalent to that of the panel body 210 in the above modification example 1, the reinforcing portion 214 of the panel body 210 in the present modification example may have a smaller size than the reinforcing portion 214 of the panel body 210 in the above modification example 1, so that the degree of freedom for design is high.

### (Modification example 3 of partition device)

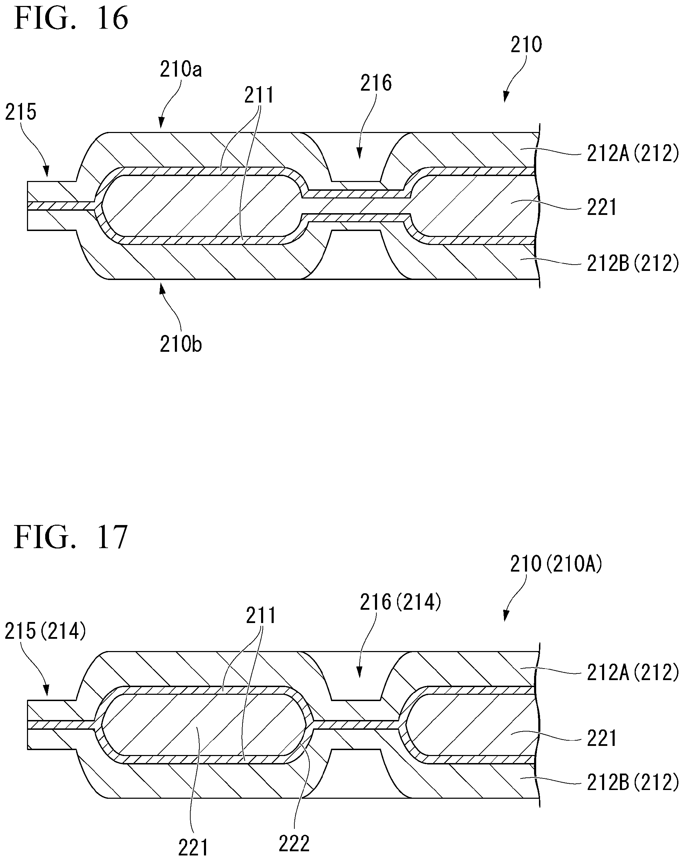

Another modification example of the above partition device will be described. FIG. 16 is a cross-sectional view showing a configuration of the present modification example.

As shown in FIG. 16, in the present modification example, porous intermediate cushioning members 221 are provided between the first cushioning member 212A and the second cushioning member 212B. The first cushioning member 212A and the intermediate cushioning members 221 are bonded to each other by the bonding agent layer 211. The second cushioning member 212B and the intermediate cushioning members 221 are bonded to each other by the bonding agent layer 211.

In the present modification example, no intermediate cushioning member 221 is disposed in portions in which the peripheral edge-reinforcing portion 215 is formed. In addition, in the present modification example, the intermediate cushioning member 221 is disposed in portions in which the intermediate reinforcing portion 216 is formed. Similar to the first cushioning member 212A and the second cushioning member 212B in the intermediate reinforcing portions 216, the intermediate cushioning members 221 in the intermediate reinforcing portions 216 are held by the thermoplastic resins forming the bonding agent layer 211 in a compressed state.

In the present modification example, the first cushioning member 212A and the second cushioning member 212B constituting the front surface 210a and the rear surface 210b of the panel body 210 are selected in consideration of the design and the texture of the panel body 210. In contrast, the intermediate cushioning members 221 which are entirely positioned inside the panel body 210 are selected in consideration of the hardness and the cost.

In the present modification example, the first cushioning member 212A and the second cushioning member 212B can be selected with priority given to the design or the texture, and the intermediate cushioning members 221 can be selected with priority given to the hardness, the softness, or the cost.

In the partitioning panel body 210 having such a configuration, due to the intermediate cushioning members 221, portions around the intermediate reinforcing portions 216 have a soft texture, and the difference in thickness between a portion in which the intermediate reinforcing portions 216 are disposed and surrounding portions thereof can be increased.

### (Modification example 4 of partition device)

Another modification example of the above partition device will be described. FIG. 17 is a cross-sectional view showing a configuration of the present modification example.

As shown in FIG. 17, in the present modification example, no intermediate cushioning member 221 is disposed in portions in which the peripheral edge-reinforcing portion 215 and the intermediate reinforcing portion 216 are formed. In portions in which the intermediate reinforcing portion 216 is formed, penetration holes 222 penetrating the laminated body 210A in its lamination direction are formed in the intermediate cushioning members 221.

The present modification example exhibits effects similar to those of the above modification example 3. Moreover, the difference between the thicknesses of the intermediate reinforcing portions 216 and the thicknesses of portions other than the reinforcing portion 214 can be increased more than in the case of the above modification example 3.

### (Modification example 5 of partition device)

Another modification example of the above partition device will be described.

In the present modification example, the first cushioning member 212A and the second cushioning member 212B are formed of a mixture of fibers disclosed in the above modification example 1 (these fibers will hereinafter be referred to as "high melting-point fibers") and low melting-point resin fibers having a lower melting point than these fibers.

For example, the melting point of low melting-point fibers contained in the first cushioning member 212A and the second cushioning member 212B may be approximately the same as the melting point of the thermoplastic resins contained in the bonding agent layer 211.

In the present modification example, in the step of forming the reinforcing portion 214, the low melting-point fibers contained in the first cushioning member 212A and the second cushioning member 212B also melt similar to the bonding agent layer 211. Even the configuration of the present modification example exhibits effects similar to those of the above modification example 1 of the partition device. In addition, in the present modification example, low melting-point fibers contained in the first cushioning member 212A and the second cushioning member 212B contribute to maintaining the compressed state of the first cushioning member 212A and the second cushioning member 212B in the reinforcing portion 214.

### (Modification example of piece of furniture with top board)

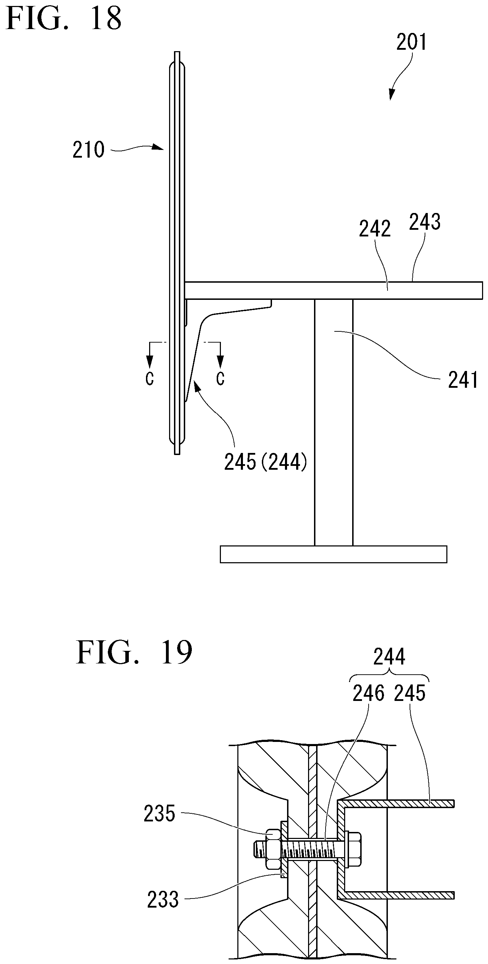

A modification example of the piece of furniture with a top board of the present invention will be described. FIG. 18 is a side view of the piece of furniture with a top board which is the modification example of the present invention. FIG. 19 is a cross-sectional view taken along line C-C in FIG. 18.

A piece of furniture 201 with a top board in the present modification example has a support body 241 which is grounded to the floor surface, a top board member 242 which is disposed at an upper end of the support body 241, the panel body 210 which is disclosed in the modification example 1 of the partition device, and an interlocking tool 244 for interlocking the panel body 210 with the top board member 242.

The support body 241 is a structural member which can be grounded to the floor surface and holds the top board member 242 at a position away from the floor surface. The support body 241 is formed of a wood, a metal, or a resin.

For example, the top board member 242 is a plate-shaped member including a horizontal upper top board surface 243. The top board member 242 is formed of a wood, a metal, or a resin.

The interlocking tool 244 has an adapter 245 which is fixed to the top board member 242 and the fixing member 233 which is disclosed in the modification example 1 of the partition device. The adapter 245 can be fixed to the top board member 242 through screwing or the like. In addition, for example, the adapter 245 has a shaft body 246 which horizontally extends in a state in which the adapter 245 is fixed to the top board member 242. The shaft body 246 of the adapter 245 has a rod shape in which threads are engraved similar to the shaft body 232 of the leg main body 231 (refer to FIG. 12) disclosed in the modification example 1 of the partition device.

In the present modification example, the intermediate reinforcing portion 216 of the panel body 210 has a shape corresponding to the posture of the panel body 210 in the piece of furniture 201 with a top board. For example, in the present modification example, since the panel body 210 is disposed in a manner perpendicular to the floor surface, the intermediate reinforcing portion 216 (refer to FIG. 10) having a linear shape elongated in a direction perpendicular to the floor surface is provided.

Operations of the piece of furniture 201 with a top board in the present modification example will be described.

In the present modification example, the panel body 210 is interlocked with the top board member 242 by the interlocking tool 244. Since the shaft body 246 of the interlocking tool 244 fixed to the top board member 242 horizontally extends, the panel body 210 interlocked with the interlocking tool 244 is held in a manner perpendicular to the upper top board surface 243. In addition, the panel body 210 extends upward beyond the upper top board surface 243. For example, the panel body 210 is attached to a part of the peripheral edge of the top board member 242. For example, a U-shaped partition surrounding a part of the peripheral edge of the top board member 242 can be constituted by using a plurality of sets of the panel body 210 and the interlocking tool 244. For example, a partition (desk top panel) surrounding three sides of the top board member 243 is constituted by disposing the panel bodies 210 one each on three sides of four sides of the upper top board surface 243 of the top board member 242 having a rectangular plate shape.

In the panel body 210 of the piece of furniture 201 with a top board in the present modification example, portions, in which the reinforcing portion 214 and the attachment portion 217 are formed, are hard, and other portions have a soft texture. Moreover, in the piece of furniture 201 with a top board in the present modification example, due to the reinforcing portion 214 it is possible to obtain the strength required to maintain the shape of the panel body 210 in a posture in which the panel body 210 is installed, without using a hard base material, a frame body, or the like.

In the piece of furniture 201 with a top board having such a configuration, since the first cushioning member 212A and the second cushioning member 212B are in a welded state in the attachment portions 217 which become fixing portions between the interlocking tool 244 and the partitioning panel body 210, it is possible to obtain strength for the partitioning panel 210 fixed to the interlocking tool 244 such that the partitioning panel body 210 can stand by itself without using a hard core material, a frame, or the like.

In the piece of furniture 201 with a top board having such a configuration, since the shaft body 232 is inserted into the hole portion 219, the interlocking tool 244 can be fixed to the partitioning panel body 210 such that the interlocking tool 244 is not misaligned with the partitioning panel body 210.

Hereinabove, the modification examples of the present invention have been described in detail with reference to the drawings. The specific configuration is not limited to these modification examples, and design changes and the like within the scope of the present invention are also included.

For example, the panel bodies disclosed in the above modification examples may be configured to be able to stand by itself without using a leg member or an interlocking tool. For example, the panel body may have a plate shape curved in a C-shape, or a plurality of panel bodies may be interlocked with each other as a foldable screen. In this case, a peripheral edge-reinforcing portion and an intermediate reinforcing portion are provided in the panel body. Accordingly, it is possible to constitute a panel body which has a soft texture and a partition in which the panel body can be installed such that the panel body can stand by itself.

In addition, the adapter of the interlocking tool disclosed in the modification example of the piece of furniture with a top board can also be fixed to a member other than a top board member. For example, the adapter may be fixed to a support body.

In addition, a table partition device can be constituted of an adapter which can be interlocked with a known table or the like, and the panel body of each of the above modification examples which can be attached to a table or the like via this adapter.

In addition, a panel body having a configuration in which an intermediate reinforcing portion having a linear shape is connected to the peripheral edge-reinforcing portion through a linear connection portion can be folded along the intermediate reinforcing portion after the panel body is manufactured.

In addition, a peripheral edge-reinforcing portion does not have to be provided in the panel body.

In addition, an attachment portion may be disposed at a position away from the peripheral edge of the panel body or may be disposed at the peripheral edge of the panel body.

In addition, only one attachment portion may be provided in the panel body.

In addition, the intermediate reinforcing portion may be elongated in a direction orthogonal to the separation direction of the attachment portion or may be elongated in a direction oblique to the separation direction of the attachment portion.

In addition, the constituent elements shown in each of the embodiments and the modification examples described above can be constituted in a suitable combination.

Hereinabove, the modification examples of the partition device and the modification examples of the piece of furniture with a top board have been described. The above modification examples are realized in the following forms.

A first aspect of the partitioning panel body of the present invention is a partitioning panel body for partitioning a space. The partitioning panel body includes a first porous cushioning member which constitutes a front surface of a partitioning panel, a second porous cushioning member which constitutes a rear surface of the partitioning panel, and an intermediate reinforcing portion in which the first cushioning member and the second cushioning member are welded to each other in a compressed state and which is disposed at a position away from the peripheral edge of the partitioning panel body.

In a second aspect of the partitioning panel body of the present invention, the intermediate reinforcing portion has a curved contour portion when viewed in a direction perpendicular to the front surface and the rear surface of the partitioning panel body of the first aspect of the partitioning panel body.

In a third aspect of the partitioning panel body of the present invention, the partitioning panel body of the first or second aspect of the partitioning panel body further includes a porous intermediate cushioning member which is disposed between the first cushioning member and the second cushioning member and differs from the first cushioning member and the second cushioning member. When viewed in a direction perpendicular to the front surface and the rear surface of the partitioning panel body, the intermediate cushioning member has a penetration hole penetrating the intermediate cushioning member at a position overlapping the intermediate reinforcing portion. When viewed in a direction perpendicular to the front surface and the rear surface of the partitioning panel body, the contour of the penetration hole of the intermediate cushioning member extends along the contour of the intermediate reinforcing portion.

In a fourth aspect of the partitioning panel body of the present invention, the partitioning panel bodies of the first to third aspects in the partitioning panel body further include a peripheral edge-reinforcing portion in which the first cushioning member and the second cushioning member are welded to each other in a compressed state and which is provided to continuously extend in the peripheral edge of the partitioning panel body when viewed in a direction perpendicular to the front surface and the rear surface of the partitioning panel body.

In a fifth aspect of the partitioning panel body of the present invention, the partitioning panel body of the fourth aspect of the partitioning panel body may further have a connection portion which connects the intermediate reinforcing portion and the peripheral edge-reinforcing portion to each other.

A first aspect of the partition device of the present invention is a partition device including the partitioning panel bodies of the first to fifth aspects of the partitioning panel body and the leg member which is fixed to the partitioning panel body. The partitioning panel body further has an attachment portion in which the first cushioning member and the second cushioning member are welded to each other in a compressed state. The leg member is fixed to the partitioning panel body in a state of being in contact with the front surface and the rear surface of the partitioning panel body in the attachment portion with the partitioning panel body interposed therebetween.

In a second aspect of the partition device of the present invention, in the first aspect of the above partition device, the attachment portion has a hole portion which penetrates the first cushioning member and the second cushioning member such that the front surface and the rear surface of the partitioning panel body are connected to each other. The leg member has the leg main body which has a shaft body inserted into the hole portion and can be grounded to the floor surface, and a fixing member which can be fixed to the shaft body. The attachment portion is interposed between the leg main body and the fixing member, so that the leg member is fixed to the attachment portion.

In a third aspect of the partition device of the present invention, in the first or second aspect of the above partition device, the attachment portion is disposed at a position away from the peripheral edge in the partitioning panel body.

In addition, in a fourth aspect of the partition device of the present invention, in the first or second aspect of the above partition device, the attachment portion is disposed at the peripheral edge in the partitioning panel body.

In a fifth aspect of the partition device of the present invention, the partitioning panels of the first to fourth aspects in the above partition device have two or more attachment portions. In the partitioning panels, the two or more attachment portions are disposed at positions away from each other. In the intermediate reinforcing portion, the second width dimension measured in a direction intersecting the separation direction is longer than the first width dimension measured in the separation direction of the attachment portion.

A first aspect of the piece of furniture with a top board of the present invention is a piece of furniture with a top board including a support body which is grounded to the floor surface, a top board member which is disposed in an upper portion of the support body, the partitioning panel body of the first aspect which is disposed to extend upward beyond the upper surface of the top board member, and an interlocking tool for interlocking the partitioning panel body with the support body or the top board member. The partitioning panel body further has an attachment portion in which the first cushioning member and the second cushioning member are welded to each other in a compressed state. The interlocking tool is fixed to the partitioning panel body in a state of being in contact with the front surface and the rear surface of the partitioning panel body in the attachment portion with the partitioning panel body interposed therebetween.

In a second aspect of the piece of furniture with a top board of the present invention, in the first aspect of the above piece of furniture with a top board, the attachment portion has a hole portion which penetrates the first cushioning member and the second cushioning member such that the front surface and the rear surface of the partitioning panel body are connected to each other. The interlocking tool has an adapter which has a shaft body inserted into the hole portion and can be fixed to the support body or the top board member, and a fixing member which can be fixed to the shaft body. The attachment portion is interposed between the adapter and the fixing member, so that the support body or the top board member is fixed to the attachment portion via the adapter.

In a third aspect of the piece of furniture with a top board of the present invention, in the first or second aspect of the above piece of furniture with a top board, the attachment portion is disposed at a position away from the peripheral edge in the partitioning panel body.

In a fourth aspect of the piece of furniture with a top board of the present invention, in the first or second aspect of the above piece of furniture with a top board, the attachment portion is disposed at the peripheral edge in the partitioning panel body.

In a fifth aspect of the piece of furniture with a top board of the present invention, the partitioning panels of the first to fourth aspects in the above piece of furniture with a top board have two or more attachment portions. In the partitioning panels, the two or more attachment portions are disposed at positions away from each other. In the intermediate reinforcing portion, the second width dimension measured in a direction intersecting the separation direction is longer than the first width dimension measured in the separation direction of the attachment portion.

### Industrial Applicability

According to the present invention, it is possible to provide a panel body which exhibits a predetermined function while giving a worker an organic and warm impression, a partition device using a panel body, a piece of furniture with a top board, and a method for manufacturing a panel body.

In addition, according to the present invention, it is possible to provide a panel body which gives a worker an organic and warm impression, has sufficient strength, and can be constituted inexpensively and simply, a partition device using a panel body, a piece of furniture with a top board, and a method for manufacturing a panel body.

Moreover, according to the present invention, it is possible to provide a partitioning panel body, a partition device, and a piece of furniture with a top board which have a soft texture and can obtain strength required to maintain a shape without using a hard base material, a frame body, or the like.

### Description of Reference Signs

1, 1A, 1B, 210 Panel body
10 Heat-joining layer (first heat-joining layer)
12 Heat-joining layer (second heat-joining layer)
20, 22 Surface layer
31 Intermediate layer (first intermediate layer)
32 Intermediate layer (second intermediate layer)
40 Bonding layer
41 Functional sheet
42 Functional layer
43 Bonding layer (first bonding layer)
44 Bonding layer (second bonding layer)
45 Function-enhancing layer (first function-enhancing layer)
46 Function-enhancing layer (second function-enhancing layer)
51 Cushioning layer (first cushioning layer)
52 Cushioning layer (second cushioning layer)
81, 281 Partition device
101, 201 Desk device (piece of furniture with top board)
210a Front surface of panel body
210b Rear surface of panel body
210A Laminated body
211 Bonding agent layer
212 Cushioning member
214 Reinforcing portion
215 Peripheral edge-reinforcing portion
216 Intermediate reinforcing portion
216a Contour portion
217 Attachment portion
218 Attachment surface
219 Hole portion
220 Connection portion
221 Intermediate cushioning member
222 Penetration hole of intermediate cushioning member
230 Leg member
231 Leg main body
232 Shaft body
233 Fixing member
234 Penetration hole
235 Nut
241 Support body
242 Top board member
243 Upper top board surface
244 Interlocking tool
245 Adapter
246 Shaft body
250 Pressing member

## Claims

1. A panel body used for defining a space, the panel body comprising:
a first cushioning layer and a second cushioning layer that contain a fibrous base material,
wherein each of the first cushioning layer and the second cushioning layer includes
a heat-joining layer which contains the base material and a joining material having a lower melting point than the base material, and
a surface layer which is bonded to one surface of the heat-joining layer and is formed of the base material.

2. The panel body according to claim 1, further comprising:
a functional sheet that is disposed between the first cushioning layer and the second cushioning layer and has a predetermined function.

3. The panel body according to claim 2,
wherein the functional sheet has a sound insulation function.

4. The panel body according to claim 2 or 3,
wherein the functional sheet includes
a functional layer which has the predetermined function,
a first bonding layer which is disposed between the functional layer and the first cushioning layer and bonds the functional layer and the first cushioning layer to each other, and
a second bonding layer which is disposed between the functional layer and the second cushioning layer and bonds the functional layer and the second cushioning layer to each other.

5. The panel body according to claim 4,
wherein the functional sheet includes
a first function-enhancing layer which is disposed between the functional layer and the first bonding layer and enhances the predetermined function of the functional layer, and
a second function-enhancing layer which is disposed between the functional layer and the second bonding layer and enhances the predetermined function of the functional layer.

6. The panel body according to claim 4 or 5,
wherein the first bonding layer and the second bonding layer are formed of a material having a lower melting point than the base material.

7. The panel body according to claim 6,
wherein the base material is formed of polyester-based fiber,
wherein the functional layer is formed of polyamide, and
wherein the first bonding layer and the second bonding layer are formed of polyethylene.

8. The panel body according to claim 1,
wherein the heat-joining layer includes
a first heat-joining layer which contains a fibrous base material and a joining material having a lower melting point than the base material, and
a second heat-joining layer which contains a fibrous base material and a joining material having a lower melting point than the base material,
wherein the surface layer formed of the base material is bonded to each of one surface of the first heat-joining layer and one surface of the second heat-joining layer, and
wherein another surface of the first heat-joining layer and another surface of the second heat-joining layer are bonded to each other.

9. The panel body according to claim 8,
wherein the surface layer contains the joining material, and
wherein an amount of the joining material contained in the surface layer is less than an amount of the joining material contained in the first heat-joining layer.

10. The panel body according to claim 8 or 9,
wherein an intermediate layer formed of a fibrous material having a higher melting point than the joining material is provided between the first heat-joining layer and the second heat-joining layer.

11. The panel body according to claim 10,
wherein the intermediate layer includes a first intermediate layer which is bonded to the first heat-joining layer and a second intermediate layer which is bonded to the second heat-joining layer, and
wherein a bonding layer is provided between the first intermediate layer and the second intermediate layer.

12. A partition device comprising:
the panel body according to any one of claims 1 to 11.

13. A piece of furniture with a top board comprising:
the panel body according to any one of claims 1 to 11.

14. A method for manufacturing a panel body comprising:
a first laminating step of laminating a first surface layer formed of a fibrous base material on one surface of a first heat-joining layer which contains the base material and a joining material having a lower melting point than the base material;
a first heating step, after the first laminating step, of heating the first heat-joining layer from another surface of the first heat-joining layer at a temperature which is a melting point of the joining material or higher and is lower than a melting point of the base material;
a second laminating step of laminating a second surface layer formed of the base material on one surface of a second heat-joining layer which contains the base material and the joining material;
a second heating step, after the second laminating step, of heating the second heat-joining layer from another surface of the second heat-joining layer at the temperature; and
a bonding step, after the first heating step and the second heating step, of bonding the first heat-joining layer and the second heat-joining layer by disposing the first heat-joining layer and the second heat-joining layer such that the other surface of the first heat-joining layer and the other surface of the second heat-joining layer face each other and by pressing the first heat-joining layer and the second heat-joining layer in a direction from the one surface toward the other surface of each of the first heat-joining layer and the second heat-joining layer.

15. The method for manufacturing a panel body according to claim 14,
wherein the first heat-joining layer and the second heat-joining layer are disposed with a functional sheet having a predetermined function interposed therebetween such that the other surface of the first heat-joining layer and the other surface of the second heat-joining layer face each other.
